# EUROPÄISCHE PATENTSCHRIFT

(11) **EP 4 330 646 B1**
(45) Veröffentlichungstag und Bekanntmachung des Hinweises auf die Patenterteilung: **18.02.2026**
(21) Anmeldenummer: 21844356.2
(22) Anmeldetag: 23.12.2021
(51) Int. Cl.: G01M 17/007

(54) **SELBSTFAHRENDE PLATTFORM ZUM SIMULIEREN VON VERKEHRSSITUATIONEN**
SELF-PROPELLED PLATFORM FOR SIMULATING TRAFFIC SITUATIONS
PLATEFORME AUTOMOTRICE POUR SIMULER DES SITUATIONS DE TRAFIC

(30) Priorität: 30.04.2021 AT 601262021
(43) Veröffentlichungstag der Anmeldung: 06.03.2024
(73) Patentinhaber: 4Activesystems GmbH, 8772 Traboch (AT)
(72) Erfinder: FRITZ, Martin, 8723 Kobenz (AT); HAFELLNER, Reinhard, 8724 Spielberg (AT)
(74) Vertreter: Dilg, Haeusler, Schindelmann Patentanwaltsgesellschaft mbH
(86) Internationale Anmeldenummer: PCT/EP2021/087589
(87) Internationale Veröffentlichungsnummer: WO 2022/228710

(56) Entgegenhaltungen:
- GB-A- 2 574 895
- US-A1- 2013 162 479

## Beschreibung

### Technisches Gebiet

Die vorliegende Erfindung betrifft eine Plattform für einen Dummy zum Simulieren von Verkehrssituationen.

### Hintergrund der Erfindung

Kraftfahrzeuge werden immer häufiger mit Fahrerassistenzsystemen ausgestattet, um in bestimmten Verkehrssituationen aktiv den Fahrer des Kraftfahrzeugs zu unterstützen und das Risiko von Unfällen zu reduzieren. Beispielsweise können moderne Fahrerassistenzsysteme die Bremsfunktion oder die Lenkung des Kraftfahrzeugs beeinflussen.

Ferner werden in modernen Verkehrsräumen autonom fahrende Kraftfahrzeuge eingesetzt, bei welchen das Kraftfahrzeug vollautomatisch durch den Verkehr eines bestimmten Verkehrsraums steuert, ohne dass der Fahrer aktiv am Fahrverhalten des Kraftfahrzeugs teilnimmt.

Zum Testen von Kraftfahrzeugen mit Fahrerassistenzsystemen oder zum Testen von autonom fahrenden Kraftfahrzeugen müssen komplexe Verkehrsszenarien mit einer Vielzahl von Verkehrsteilnehmern nachgebildet werden.

Dabei sind fahrbare Plattformen bekannt, auf welchen ein gewünschter Dummy, wie beispielsweise ein Fahrzeug oder ein menschlicher Körper, befestigt werden kann. Bei Fehlfunktionen der Fahrerassistenzsysteme können dennoch Kollisionen unabsichtlich oder absichtlich während eines Tests herbeigeführt werden, sodass das zu testende Fahrzeug über die Plattform fährt. Beim Überfahren der Plattform mit dem zu testenden Fahrzeug soll dieses wenn möglich unbeschadet bleiben und ebenfalls die Plattform für weitere Tests zur Verfügung stehen. Das Patentdokument US 2013/162479 A1 offenbart eine Plattform zum Tragen eines Dummys zur Simulation von Verkehrssituationen, mit einem flachen Grundkörper, der über Rollenelemente verfahrbar ist, einem Befestigungsbereich für den Dummy sowie einem Installationsbereich für Funktionselemente, wobei die Plattform so flach ausgebildet ist, dass sie von einem Fahrzeug überfahren werden kann.

### Darstellung der Erfindung

Es ist eine Aufgabe der vorliegenden Erfindung, eine fahrende Plattform bereitzustellen, auf welcher ein Dummy befestigbar ist, wobei die Plattform derart ausgebildet ist, dass ein Kollisionsfahrzeug schadlos über die Plattform fahren kann.

Diese Aufgabe wird mit dem Gegenstand des unabhängigen Anspruchs gelöst.

Gemäß einem ersten Aspekt der vorliegenden Erfindung wird eine Plattform für einen Dummy zum Simulieren von Verkehrssituationen beschrieben. Die Plattform weist einen Grundkörper, welcher eine Bodenfläche und eine gegenüber der Bodenfläche ausgebildete Oberfläche aufweist, und zumindest ein Rollenelement auf, welches an der Bodenfläche angeordnet ist,
wobei das Rollenelement derart ausgebildet ist, dass der Grundkörper mittels des Rollenelements entlang eines Bodens verfahrbar ist,
wobei der Grundkörper einen Befestigungsbereich und einen Installationsbereich aufweist. Auf der Befestigungsoberfläche des Befestigungsbereichs ist eine Befestigungsvorrichtung zum Befestigen des Dummys ausgebildet, wobei in dem Installationsbereich funktionale Elemente installierbar sind. Der Grundkörper ist derart dünn ausgebildet, dass ein Kollisionsfahrzeug schadlos über den Grundkörper fahren kann.

Gemäß einem weiteren Aspekt wird ein Verfahren zum Betreiben der oben beschriebenen Plattform sowie ein Verfahren zum Herstellen der oben beschriebenen Plattform beschrieben.

Das zu testende Fahrzeug (Kollisionsfahrzeug) kann beispielsweise ein sich selbst bewegendes Objekt darstellen, wie beispielsweise ein Fahrzeug, wie beispielsweise ein PKW, Lkw, Bus oder Fahrrad.

Der Dummy, welcher auf der Plattform befestigt ist, ist beispielsweise ein menschenähnlicher Dummy, welcher stehend, liegend oder sitzend auf der Plattform befestigt ist. Ferner kann der Dummy eine Fahrzeugattrappe oder eine Fahrradattrappe darstellen.

Die Plattform weist den Grundkörper auf, welcher eine plattenähnliche Form ausbildet. Dies bedeutet das seine Erstreckung innerhalb einer Bodenebene deutlich größer ist als seine Dicke in zum Beispiel vertikaler Richtung. Der Grundkörper weist dabei eine Bodenfläche und eine gegenüberliegende Oberfläche auf. Der Grundkörper wird mit seiner Bodenfläche auf einem Boden aufgelegt. In diesem Fall ist die Bodenfläche parallel zum Boden bzw. zur Bodenebene. In der Bodenfläche ist das zumindest eine Rollenelement drehbar angeordnet, welches zumindest teilweise aus dem Grundkörper hinausragt und somit einen Abstand zwischen Grundkörper und Boden bereitstellt. Auf der Oberfläche ist eine Befestigungsvorrichtung ausgebildet. Die Befestigungsvorrichtung ist konfiguriert, um den Dummy zu fixieren. Ferner kann die Befestigungsvorrichtung steuerbar ausgebildet sein, um das Testobjekt selektiv, beispielsweise kurz vor einer Aufprallsituation, freizugeben, sodass die Befestigung zwischen dem Grundkörper und dem Testobjekt gelöst ist.

Als Bezugssystem wird im Folgenden die Bodenebene (Horizontalebene) verwendet, wobei, wenn die Plattform auf dem Boden aufliegt die Bodenfläche parallel zu der Bodenebene ausgebildet ist. Die Bodenebene wird somit von einer x-Achse (beispielsweise in Fahrtrichtung der Plattform) und einer Y-Achse definiert. Die x-Achse und Y-Achse liegen somit in der Bodenebene. Senkrecht zur Bodenebene und somit parallel zur Normalen der Bodenebene verläuft die z-Achse (vertikal).

Die Plattform weist insbesondere einen Installationsbereich auf, indem alle funktionalen Elemente, wie beispielsweise die Antriebseinheiten oder Kommunikationseinheiten, der Plattform angeordnet sind. In dem Befestigungsbereich wird auf der Befestigungsoberfläche der Dummy befestigt. Entlang der Bodenebene ist die Plattform in den Befestigungsbereich und den Installationsbereich unterteilt.

Die Befestigungsvorrichtung kann beispielsweise aus einem Hakensystem bestehen, in welches der Dummy eingehängt werden kann. Ferner kann die Befestigungsvorrichtung einen Magneten, insbesondere einen steuerbaren Elektromagneten, aufweisen, um mittels magnetischer Haltekraft der Dummy an der Oberfläche zu befestigen.

An der Bodenfläche ist das zumindest eine Rollenelement angeordnet. In einer bevorzugten Ausführungsform können an dem Grundkörper drei oder vier Rollenelemente beabstandet zueinander an der Bodenfläche angeordnet sein. Somit sind eine hohe Rollstabilität und eine gute Steuerbarkeit der Plattform gegeben. Das Rollenelement kann beispielsweise aus Gummirollen, Hartplastikrollen oder Kunststoffrollen bestehen.

Die Plattform ist mittels dem zumindest einem Rollenelement entlang des Bodens verfahrbar. Dabei kann an dem Grundkörper ein Zugmechanismus, wie beispielsweise ein Zugseil oder eine Zugstange, befestigt sein, um die Plattform über dem Boden zu ziehen. Ferner kann der Grundkörper auf einer Führungsschiene befestigt sein, wobei der Grundkörper mit dem Rollenelement entlang der Führungsschiene verfahrbar ist. Ferner kann die Plattform frei verfahrbar ausgebildet sein, indem, wie weiter unten detaillierter beschrieben, dass Rollenelement selbst angetrieben wird.

Die Plattform ist erfindungsgemäß derart dünn ausgebildet, dass ein Kollisionsfahrzeug schadlos über den Grundkörper fahren kann. Diesbezüglich werden im folgenden bevorzugte Ausführungsformen beschrieben, die alle zusammen zu einer dünnen und robusten Ausbildung der erfindungsgemäßen Plattform beitragen:
Gemäß einer ersten beispielhaften Ausführungsform ist der Grundkörper derart stufenförmig ausgebildet ist, wobei insbesondere eine Befestigungsdicke zwischen der Bodenfläche und der Oberfläche in dem Befestigungsbereich, insbesondere 30 mm, 25mm, 20mm, 15mm, 10 mm, oder 5mm, kleiner ist als eine Installationsdicke zwischen der Bodenfläche und der Oberfläche in dem Installationsbereich. Die Mindestdifferenz zwischen der Installationsdicke und der Befestigungsdicke ist bei der stufenförmigen Ausbildung beispielsweise mindestens 1 mm bis 2 mm.

Gemäß einer weiteren beispielhaften Ausführungsform beträgt die Befestigungsdicke weniger als 40mm, insbesondere weniger als 35mm, weniger als 30mm, weniger als 25mm, weniger als 20mm, weniger als 15mm, weniger als 10 mm, beträgt. Die die Installationsdicke kann weniger als 60mm, weniger als 55 mm, insbesondere weniger als 50mm, weniger als 45mm, weniger als 40mm, weniger als 35mm, weniger als 30mm, weniger als 25mm, weniger als 20mm, weniger als 15mm, weniger als 10 mm, beträgt betragen. Die Maximaldicke der Plattform zwischen einer Bodenauflage des Rollenelements (d.h. den Bereich des Rollenelements, der am weitesten von der Oberfläche der Plattform entfernt ist, wenn die Plattform unbelastet auf dem Boden aufliegt) auf dem Boden und der Oberfläche, insbesondere des Installationsbereichs, ist weniger als 60mm, weniger als 55 mm, insbesondere weniger als 50 mm, 45 mm, 40 mm oder 35 mm. Allerdings kann bei einer homogenen, stufenlosen Plattform die maximale Dicke auch im Befestigungsbereich vorliegen. Mit anderen Worten kann in einer stufenlosen Ausführungsform der Plattform die Befestigungsdicke gleich der Installationsdicke sein.

Somit weist die Plattform zwei unterschiedliche dicken Bereiche auf. In dem dickeren Installationsbereich werden die funktionalen Elemente untergebracht, die in der Regel eine größere Dicke benötigen. In dem Befestigungsbereich, auf welchem der Dummy befestigt ist, befinden sich beispielsweise ausschließlich antriebslose Rollenelemente, sodass keine weiteren dickeren funktionalen Elemente verbaut werden müssen. Der Befestigungsbereich kann somit dünner als der Installationsbereich ausgebildet werden. Somit wird ausschließlich die benötigte Dicke für die funktionalen Elemente verwendet und in den anderen Bereichen, insbesondere in dem Befestigungsbereich die maximal mögliche dünnste Ausführung möglich. Insbesondere ist vorteilhaft, dass ein äußerst dünner Befestigungsbereich zur Verfügung gestellt werden kann, sodass die darauf befestigten Dummys äußerst knapp über dem Boden lokalisiert sind. Dies führt zu einer Reduktion von Fehlmessungen von Sensoren der Fahrerassistenzsysteme, da beispielsweise der Boden eines Dummys fast auf demselben Niveau wie der Boden ist und lediglich der dünne Installationsbereich der Plattform zwischen liegt. Somit kann ein realer Dummy, wie beispielsweise ein Fußgänger, der auf dem Boden läuft, realitätsnah nachgebildet werden.

Gemäß einer weiteren beispielhaften Ausführungsform weist der Befestigungsbereich (mehr als 30 %, insbesondere mehr als 40%, 50%, oder 70%, der Oberfläche des Grundkörpers aufweist. Insbesondere kann der dünne Befestigungsbereich mehr als die Hälfte der Fläche innerhalb der Bodenebene der Plattform einnehmen, sodass nur ein kleinerer Installationsbereich eine höhere Dicke für die funktionalen Elemente aufweisen muss.

Gemäß einer weiteren beispielhaften Ausführungsform ist zwischen dem Installationsbereich und dem Befestigungsbereich ein Übergangsbereich ausgebildet ist, wobei die Oberfläche in dem Übergangsbereich einen Winkel zur Oberfläche in dem Installationsbereich (und/oder dem Befestigungsbereich zwischen 5° und 45°, insbesondere zwischen 5° und 15°, aufweist. Der Winkel wird insbesondere zwischen der Ebene (oder deren Normalen), in welcher der Übergangsbereich liegt, und der Bodenebene (oder deren Normalen) gemessen. Insbesondere bei Ausbildung des Übergangsbereichs mit einem schrägen, geneigten Verlauf, kann eine direkte Rückstrahlung von Sensorstrahlen, wie beispielsweise Radarwellen, vermieden werden. Insbesondere gegenüber einem stufenförmigen Übergang (Winkel = 90°), bei welchen die Radarwellen direkt zurück reflektiert werden, werden bei dem Winkel, insbesondere bei den oben dargestellten kleineren Winkelbereichen des Übergangsbereichs die Radarwellen insbesondere Richtung Himmel (vertikal) abgestrahlt und verursachen somit keine Fehlmessungen.

Gemäß einem weiteren Aspekt der vorliegenden Erfindung weist der Grundkörper Außenkantenbereiche auf, die den Befestigungsbereich und/oder den Installationsbereich umgeben, wobei die Außenkantenbereiche keilförmig ausgebildet sind und wobei zumindest ein keilförmiger Außenkantenbereich einen Öffnungswinkel von ungefähr unter 25° aufweist. Die keilförmigen Außenkantenbereiche bilden somit eine Rampe über die das Kollisionsfahrzeug schonend auf die Deckfläche bzw. die Oberfläche der Plattform gelangen kann und die gesamte Plattform überfahren kann. Der Öffnungswinkel wird insbesondere zwischen der Bodenebene (bzw. deren normalen) und der Ebene (bzw. deren normalen), in welcher die Oberfläche der keilförmigen Außenkantenbereiche verläuft, gemessen. Ebenso wird durch die keilförmigen Außenkantenbereiche eine Reflexion von Sensorstrahlung mit einer vertikalen Komponente zurück reflektiert, sodass das Risiko von Fehlmessungen reduziert wird.

Gemäß einer weiteren beispielhaften Ausführungsform weisen die Außenkantenbereiche eine strahlungsabsorbierende, insbesondere radarwellenabsorbierende, Oberfläche auf. Die Oberfläche weist z.B. IR/RAM-Beschichtungen (Infrarot IR; Radarwellen Absorbierendes Material RAM) auf. Solche Beschichtungen weisen radarabsorbierende Eigenschaften mit niedrigen Emissionen in den relevanten Infrarot-Wellenlängenbereichen auf. Dabei können z.B. dielektrische IR-Beschichtungen zum Einsatz kommen. Solche Materialien bestehen aus einer IR Deckschicht und einem darunter liegenden RAM oder einer quasihomogenen Mischung aus RAM und IR-Material, beispielsweise C-Ram Paint (U,S,E) HP oder C-Ram Paint (U,S,E) VHP der Firma Cuming Microwave (Technical Bulletin 340-1) . Eine solche Beschichtung erreicht beispielsweise eine Absorption von ungefähr -30 dB in einem Frequenzband von 8-18 GHz.

Gemäß einer weiteren beispielhaften Ausführungsform weist die Oberfläche eine graue Beschichtung, insbesondere RAL 7005 oder RAL 7035 auf.

Aufgrund des absorbieren Charakters der strahlungsabsorbierenden, insbesondere radarwellenabsorbierenden, Oberfläche der Außenkantenbereiche können somit Fehlmessungen reduziert werden.

Gemäß einer weiteren beispielhaften Ausführungsform weist die Oberfläche im Bereich des Rollenelements ein kuppelförmiges Abdeckelement auf. Somit können trotz eines schmalen Installationsbereich Rollenelemente mit einem größeren Rollenradius verwendet werden. Der dazu notwendige Installationsraum kann durch die kuppelförmigen Abdeckelemente erzeugt werden. Aufgrund der Kuppelform werden zudem die Sensorstrahlungen nicht direkt zurückgestrahlt, sondern mit einer vertikalen Komponente, sodass Fehlmessungen reduziert werden. Die kuppelförmigen Abdeckelemente können auch mit signalabsorbierender Farbe beschichtet werden, z.B. mit grauer Farbe (z.B. RAL 7005 oder RAL 7035).

Gemäß einer weiteren beispielhaften Ausführungsform weist die Plattform ferner einen Antriebsstrang auf, der eine Antriebseinheit aufweist, wobei das Rollenelement mit der Antriebseinheit zum Übertragen eines Antriebsmoments gekoppelt ist. Der Antriebsstrang und das Rollenelement sind entlang einer Axialrichtung hintereinander derart gekoppelt sind, dass der Antriebsstrang zusammen mit dem Rollenelement zumindest teilweise in einer Aufnahmeöffnung in der Bodenfläche des Grundkörpers vorliegt, wobei der Antriebsstrang mit dem Rollenelement in die Aufnahmeöffnung hinein- und herausschwenkbar angeordnet ist.

Unter dem Begriff Antriebsstrang der Plattform werden alle Komponenten verstanden, die in der Plattform die Leistung für den Antrieb generieren und bis zu dem Rollenelement bzw. auf den Boden übertragen. Der Antriebsstrang weist entsprechend die Antriebseinheit, insbesondere einen Elektromotor, auf die ein entsprechendes Antriebsmoment über eine Antriebswelle auf die Drehwelle des Rollenelement überträgt, um dieses anzutreiben.

Der Antriebsstrang kann beispielsweise ein Gehäuse bzw. eine tragende Struktur aufweisen, in welcher alle funktionalen mechanischen Komponenten, wie beispielsweise die Antriebseinheit oder Lagerungen für die Wellen angeordnet sind. Der Antriebsstrang ist erfindungsgemäß schwenkbar an den Grundkörper angeordnet, sodass bei Last (insbesondere Gewichtskraft durch ein überfahren des Kollisionsfahrzeug, in vertikaler Richtung, der Antriebsstrang zusammen mit dem Rollenelement in Richtung Plattform geschwenkt wird, um die Lastbeanspruchung zu dämpfen und gegebenenfalls das Rollenelement zusammen mit dem Antriebsstrang in einem Aufnahmebereich, beispielsweise in einer Installationsbox, sicher aufzubewahren, sodass keine weitere Gewichtskraft des Kollisionsfahrzeugs auf den Antriebsstrang und das Rollenelement übertragen wird. Ist insbesondere möglich, wenn in einem eingeschwenkten Zustand des Antriebsstrang und des Rollenelement in einen Aufnahmebereich der Plattform bzw. des Grundkörpers die gesamte Gewichtskraft der Plattform und des überfahren den Kollisionsfahrzeugs über den Grundkörper in dem Boden eingeleitet wird und nicht länger über das Rollenelement. Somit kann eine dünne Plattform, die äußerst robust gegenüber schweren Kollisionsfahrzeugen (zum Beispiel Schwerlast LKWs) bereitgestellt werden.

Gemäß einer weiteren beispielhaften Ausführungsform weist die Antriebseinheit eine Antriebswelle und das Rollenelement eine Drehwelle auf, wobei die Antriebseinheit und das Rollenelement derart angeordnet sind, dass die Antriebswelle und die Drehwelle parallel zur Axialrichtung verlaufen.

Gemäß einer weiteren beispielhaften Ausführungsform sind die Antriebseinheit und das Rollenelement derart angeordnet, dass die Antriebswelle und die Drehwelle koaxial verlaufen.

Gemäß einer weiteren beispielhaften Ausführungsform weist der Antriebsstrang eine Getriebeeinheit, insbesondere ein Planetengetriebe, auf, welches zwischen der Antriebswelle und der Drehwelle derart angeordnet ist, dass ein Antriebsmoment der Antriebswelle auf die Drehwelle übersetzt übertragbar ist. Somit können beispielsweise leistungsschwächere Antriebseinheiten (Elektromotoren) eingesetzt werden, um dennoch genügend Antriebsmoment für das Rollenelement zu erzeugen. Diese leistungsschwächeren Antriebseinheiten können hingegen wieder dünner ausgebildet werden, sodass dies die Gesamtdicke der Plattform weiter reduziert.

Gemäß einer weiteren beispielhaften Ausführungsform weist der Antriebsstrang eine weitere Antriebseinheit (zum Beispiel ein weiterer Elektromotor) auf, wobei die weitere Antriebseinheit derart an die Getriebeeinheit gekoppelt ist, dass ein weiteres Antriebsmoment von der Antriebswelle auf die Drehwelle übersetzt übertragbar ist. Insbesondere kann die Antriebseinheit und die weitere Antriebseinheit in Serie angeordnet werden und somit entlang einer gemeinsamen Axialrichtung das Antriebsmoment auf die Antriebswelle erzeugen. Alternativ kann die Antriebseinheit und die weitere Antriebseinheit parallel geschaltet werden und somit nebeneinander, beispielsweise wie im Folgenden beschrieben über ein Planetengetriebe, die entsprechenden Antriebsmomente auf die Antriebswelle übertragen.

Gemäß einer weiteren beispielhaften Ausführungsform weist die Getriebeeinheit ein Planetengetriebe mit zumindest einem ersten und einem zweiten Planetenrad auf, wobei die Antriebseinheit das erste Planetenrad und die weitere Antriebseinheit an das zweite Planetenrad gekoppelt ist. Die Drehwelle ist beispielsweise ein umlaufendes Hohlrad, auf dessen Innenseite die Planetenräder laufen.

Gemäß einer weiteren beispielhaften Ausführungsform weist der Antriebsstrang, insbesondere an einem axialen Ende, einen Drehpin, welcher eine Schwenkachse ausbildet, auf, wobei der Drehpin mit dem Grundkörper gekoppelt ist. Die Schwenkachse verläuft quer zur Axialrichtung des Antriebsstrangs. Insbesondere wird der Drehpin mittels einer Gleitlagerung mit dem Grundkörper gekoppelt. Alternativ können zusätzlich Kugel- oder Walzlager verwendet werden.

Gemäß einer weiteren beispielhaften Ausführungsform weist der Antriebsstrang an dem axialen Ende eine elektrische Koppelstelle auf zum Ankoppeln eines elektrischen Steckers. Insbesondere wird die Koppelstelle in dem Bereich der Schwenkachse gebildet, sodass beim Schwenken des Antriebsstrangs kaum eine relative Bewegung der Koppelstelle und somit des elektrischen Steckers erzeugt wird. Dies reduziert die Halterung und die Abnutzung der Steckverbindung. Ferner kann diese mit einfacheren Mitteln Dichte und ausgebildet werden.

Gemäß einer weiteren beispielhaften Ausführungsform ist der elektrische Stecker mit der Koppelstelle wasserdicht verbunden, insbesondere mittels einer Klebeverbindung und/oder einer Schrumpfschlauchverbindung.

Gemäß einer weiteren beispielhaften Ausführungsform weist die Plattform eine Schwenkfeder auf, welche zwischen dem Antriebsstrang und dem Grundkörper derart angeordnet ist, dass eine Schwenkbewegung des Antriebsstrangs relativ zum Grundkörper definiert dämpfbar ist. Somit können Vibrationen während dem Bewegen der Plattform über dem Boden gedämpft werden. Zudem kann die Einschwenkgeschwindigkeit bei Last reduziert werden. Die Schwenkfeder kann beispielsweise eine Blattfeder oder eine Schraubenfeder ausbilden.

Gemäß einer weiteren beispielhaften Ausführungsform weist die Schwenkfeder eine degressive Federkennlinie auf, die mit Zunahme der Einfederung des Antriebsstrangs in die Aufnahmeöffnung die Federkraft verringert.

Gemäß einer weiteren beispielhaften Ausführungsform erzeugt die Schwenkfeder, insbesondere als Schraubenfeder, eine Federkraft entlang einer Federkraftrichtung, wobei die Schwenkfeder derart zwischen dem Grundkörper und dem Antriebsstrang angeordnet ist, dass die Federkraft einen Winkel zwischen 20° und 70°, insbesondere zwischen 40° und 50°, aufweist.

Die Schwenkrichtung verläuft tangential umfänglich um die Schwenkachse. Im Wesentlichen verläuft die Schwenkrichtung mit einer vertikalen Komponente, insbesondere vertikal. Ferner läuft die Schwenkrichtung innerhalb einer Dämpfungsebene gebildet, die durch die y-z-Achsen gebildet wird und eine Normale nD parallel zur x-Achse aufweist. Die Gewichtskraft der Plattform 100 und des überfahrenden Kollisionsfahrzeugs verläuft vertikal, parallel zur Normalen der Bodenebene. Die Schwenkfeder ist derart schräg zur Normalen der Bodenebene angeordnet, dass die Federkraft der Schwenkfeder und entsprechend die Erstreckungsrichtung der Schwenkfeder nicht parallel zur Schwenkrichtung und nicht parallel zur Gewichtskraft verläuft, sondern ebenfalls mit dem vorgegebenen Winkel. Dies führt dazu, dass bei Einfedern des Antriebsstrangs in Schwenkrichtung die Schwenkfeder zusammengedrückt wird und aufgrund der Gewichtskraft Belastung die Schwenkfeder definiert ausknickt. Dieses Ausknicken führt dazu, dass die Federkraft reduziert wird und entsprechend bei höherem Federweg eine geringere Federkraft aufgrund des Einknickens eingestellt wird. Dies erzeugt entsprechend die degressive Federkennlinie.

Gemäß einer weiteren beispielhaften Ausführungsform weist der Antriebsstrang eine Rollenbefestigungseinheit auf, an welcher das Rollenelement austauschbar befestigbar ist, wobei die Rollenbefestigungseinheit um die Axialrichtung drehbar ist. Die Rollenbefestigungseinheit es beispielsweise an der Antriebswelle drehfest gekoppelt sodass bei Drehung der Antriebswelle ebenfalls die Rollenbefestigungseinheit gedreht wird. An der Rollenbefestigungseinheit befinden sich beispielsweise Aufnahmebohrungen für ein Befestigungselement, um das Rollenelement mit diesem an die Rollenbefestigungseinheit drehfest zu befestigen.

Gemäß einer weiteren beispielhaften Ausführungsform ist das Rollenelement mittels einer, insbesondere mittels ausschließlich einer, Befestigungsschraube an der Rollenbefestigungseinheit lösbar befestigbar, wobei die Einschraubrichtung der Befestigungsschraube insbesondere parallel zur Axialrichtung (der Drehwelle und der Antriebswelle) ausgebildet ist. Insbesondere kann die Antriebswelle und die Drehteller koaxial sein und eine gemeinsame Axialrichtung aufweisen. Die Rollenbefestigungseinheit weist insbesondere in ihrem Zentrum bzw. Mittelpunkt eine in Axialrichtung erstreckende Aufnahmebohrung auf. Das Rollenelement weist im Mittelpunkt eine Durchgangsöffnung auf, durch welche die Befestigungsschraube hindurch gesteckt wird und in der Aufnahmebohrung der Rollenbefestigungseinheit fixiert wird.

Gemäß einer weiteren beispielhaften Ausführungsform weist das Rollenelement eine erste Kontaktfläche und die Rollenbefestigungseinheit eine zweite Kontaktfläche auf, wobei die erste Kontaktfläche und die zweite Kontaktfläche miteinander korrespondierende Verzahnungselemente aufweisen, um eine formschlüssige Kopplung bereitzustellen. Mittels der formschlüssigen Kopplung wird das Rollenelement drehfest an der Rollenbefestigungseinheit befestigt. Die Befestigungsschraube drückt das Rollenelement somit axialen an die Rollenbefestigungseinheit und die Verzahnungselemente sichern ein Verdrehen des Rollenelements relativ zu der Rollenbefestigungseinheit.

Gemäß einer weiteren beispielhaften Ausführungsform sind die korrespondierenden Verzahnungselemente derart ausgebildet, dass eine Hirth-Verzahnung bereitstellbar ist. Die Hirth-Verzahnung bildet eine formschlüssige Verbindung. Da Zähne (Erhebungen) und Vertiefungen einer Plan-Kerbverzahnung fest ineinandergreifen und sich nicht aufeinander abwälzen, liegen die Zähne statisch und flächig aneinander. Die Zähne und Vertiefungen sind radial angeordnet, konisch und zentrieren somit das Rollenelement relativ zu der Rollenbefestigungseinheit.

Gemäß einer weiteren beispielhaften Ausführungsform sind die korrespondierende Verzahnungselemente als halbkugelförmige Erhebungen und entsprechend korrespondierende halbkugelförmige Vertiefungen ausgebildet. Bei Ineinandergreifen der Erhebungen und Vertiefungen entsteht eine formschlüssige Verbindung aufgrund der halbkugelförmigen Ausgestaltung wird zudem ein Zentrierungseffekt erzeugt. Somit kann in einfacher Art und Weise das Rollenelement zügig gelöst und befestigt werden.

Gemäß einer weiteren beispielhaften Ausführungsform weist die Plattform ferner eine Leistungsplatine auf, welche in dem Grundkörper, insbesondere in dem Installationsbereich, angeordnet ist. Ferner weist die Plattform zumindest eine Batteriezelle auf, welche mit der Leistungsplatine derart gekoppelt ist, dass die Leistungsplatine ein Laden der und einen Strombezug von der Batteriezelle ermöglicht. Insbesondere können mehrere Batteriezellen an die Leistungsplatine gekoppelt werden. Diese können dabei mittels einer logischen Schaltung in der Leistungsplatine zusammen oder getrennt geladen werden oder eine gleiche oder unterschiedliche Leistung von den Batteriezelle entnommen werden. Batteriezellen sind insbesondere Einzellen mit einem Gehäuse und einem inneren Batterievolumen sowie zugeordneter externer Anschlusspole. Die Batteriezellen können einzeln von dem Grundkörper entnommen oder an diesem befestigt werden. Die Batteriezellen sind insbesondere keine Akkumulatoren, indem eine Vielzahl von Batteriezellen in einem gemeinsamen Gehäuse integriert werden und nicht einzeln entnommen werden können.

Gemäß einer weiteren beispielhaften Ausführungsform weist die Plattform zumindest zwei Batteriezellen auf, wobei die Batteriezellen parallel geschaltet sind.

Gemäß einer weiteren beispielhaften Ausführungsform sind die Einzelspannungen der Batteriezellen hochmodulierbar sind. Mit anderen Worten können beispielsweise in den Spannungen der einzelnen Batteriezellen zusammen modelliert, sozusagen addiert, werden, um eine gewünschte Gesamtleistung zu erzeugen. Die Leistungsplatine kann insbesondere eine intelligente bzw. logische Leistungssteuerung aufweisen und je nach Leistungsbedarf gewünschte Nennleistung der einzelnen Batteriezellen entnehmen. Insbesondere kann von jeder Batteriezelle eine unterschiedliche Nennleistung bezogen werden oder von allen Batteriezellen jeweils die gleiche Nennleistung bezogen werden.

Gemäß einer weiteren beispielhaften Ausführungsform wobei die Plattform mehr als 10, insbesondere mehr als 16 Batteriezellen aufweist.

Gemäß einer weiteren beispielhaften Ausführungsform ist zumindest eine der Batteriezellen als Lithiumtitanat-Batterie mit einer Nennspannung zwischen 1,2 V und 3 V, insbesondere 2,4 V, ausgebildet.

Gemäß einer weiteren beispielhaften Ausführungsform ist zumindest eine der Batteriezellen als Flachbatterie mit einem viereckigen Umfang und einer Dicke von weniger als 22mm, insbesondere weniger als 14 mm, ausgebildet. Somit können eine Vielzahl von Flachbatterien bzw. Batteriezellen entlang der Bodenebene nebeneinander angeordnet werden, sodass eine flache Bauhöhe der Plattform erzielt werden kann.

Gemäß einer weiteren beispielhaften Ausführungsform weist zumindest eine der Batteriezellen einen ersten Pol, der mit einem ersten Kontaktpin ausgebildet wird, und einen zweiten Pol auf, der mit einem zweiten Kontaktpin ausgebildet ist. Der erste Kontaktpin und der zweite Kontaktpin ist mit entsprechenden Aufnahmebuchsen der Leistungsplatine gekoppelt ist.

Gemäß einer weiteren beispielhaften Ausführungsform weist der erste Kontaktpin und der zweite Kontaktpin eine unterschiedliche Länge auf. Somit kann bei einem Abstecken der Batteriezelle von der Leistungsplatine gezielt zunächst entweder der Pluspol oder dem Minuspol, welcher an dem entsprechenden kurzen Kontaktpin anliegt, gelöst werden und erst später der Pluspol bzw. Minuspol des längeren Kontaktpins. Somit kann beim Auswechseln einer Batteriezelle ein Kurzschluss verhindert werden.

Gemäß einer weiteren beispielhaften Ausführungsform weist der Grundkörper zumindest zwei elektrischen Kontaktflächen auf, die von außerhalb der Plattform frei zugänglich sind. Die Kontaktflächen sind mit der Leistungsplatine stromleitend verbunden, wobei die zwei elektrischen Kontaktflächen insbesondere derart ausgebildet sind, dass Schleifkontakte mit Kontaktstellen einer stationären Ladestation bereitstellbar sind. Beispielsweise kann die Plattform in eine Ladestation einfahren und bei einer gewissen Ladeposition eine elektrische Kontaktierung zwischen den Schleifkontakt der Plattform und den Schleifkontakt in der Ladestation herstellen.

Ferner können ebenfalls elektrische Kontaktflächen ausgebildet werden, die unter der Oberfläche oder nahe an der Bodenfläche der Plattform angeordnet sind und nicht von außen frei zugänglich sind. Die Plattform kann beispielsweise in einer Ladeposition fahren in einer induktiven Ladestation. Somit kann über induktive Ladung die Batteriezellen der Plattform geladen werden.

Gemäß einer weiteren beispielhaften Ausführungsform weist die Plattform ferner zumindest ein Antennenmodul, insbesondere ein WLAN oder ein GPS Antennenmodul, auf, wobei der Grundkörper an der Oberfläche eine Aufnahmeöffnung aufweist, in welcher das Antennenmodul angeordnet ist.

Gemäß einer weiteren beispielhaften Ausführungsform ist das Antennenmodul in der Aufnahmeöffnung derart angeordnet, dass das Antennenmodul bündig mit der Oberfläche abschließt. Alternativ kann eine Oberfläche des Antennenmoduls 6 mm, insbesondere 3 mm oder 1 mm von der Oberfläche des Grundkörpers ins Innere der Aufnahmeöffnung versetzt sein. Somit kann selbst bei Überfahren der Plattform mit einem Kollisionsfahrzeug ein Schadensrisiko des Antennenmoduls reduziert werden.

Gemäß einer weiteren beispielhaften Ausführungsform ist das Antennenmodul als Flachantenne ausgebildet, wobei das Antennenmodul insbesondere zylinderförmig mit einem Durchmesser von 90mm bis 50mm, insbesondere von 70 mm aufweist. Entsprechend kann das Antennenmodul zylinderförmige ausgebildet werden und in eine entsprechend runde Aufnahmebohrung in der Plattform integriert werden

Gemäß einer weiteren beispielhaften Ausführungsform weist das Antennenmodul eine Strahlungscharakteristik mit zumindest einer Hauptkeule auf, die im Wesentlichen innerhalb einer Horizontalebene (seit der Bodenebene) liegt, wenn die Plattform auf dem Boden aufliegt. Typischerweise werden bei Antennen die Strahlungsrichtung in vertikale Richtung ausgelegt. Da bei Plattformen die Sende- und Empfangseinrichtungen ebenfalls bodennah angeordnet werden, ist gemäß dem Ausführungsbeispiel von dem typischen das erfindungsgemäße Antennenmodul ist derart konfiguriert, dass die Hauptkeule der Strahlungsquelle im Wesentlichen horizontal. Somit kann mit einer geringeren Strahlungsleistung eine robuste Signalübertragung bereitgestellt werden.

Gemäß einer weiteren beispielhaften Ausführungsform stellt die Aufnahmeöffnung eine Durchgangsöffnung zwischen der Oberfläche und der Bodenfläche des Grundkörpers da. Somit kann eine einfachere Demontage des Antennenmoduls ermöglicht werden, indem beispielsweise von einer Seite der Aufnahmeöffnung mit der Hand oder mit einem Werkzeug eingefahren wird und das Antennenmodul auf der gegenüberliegenden Seite hinausgedrückt werden.

Gemäß einer weiteren beispielhaften Ausführungsform weist das Antennenmodul ein Gehäuse und eine Antennenelektronik auf, die in dem Gehäuse befestigt ist. Zwischen einer Oberseite des Gehäuses, die bündig mit der Oberfläche des Grundkörpers ist oder von der Oberfläche in Richtung Umgebung hervorragt, und der Antennenelektronik liegt ein Abstandsvolumen vor. Die Oberseite des Gehäuses ist derart elastisch verformbar ausgebildet, dass eine elastische Verformung in das Abstandsvolumen bereitstellbar ist. Somit kann das Abstandsvolumen einen Puffer und ein Dämpfungselement darstellen, sodass die Gewichtskraft eines über das Antennenmodul fahrenden Kollisionsfahrzeug gedämpft wird und somit ein Schaden an dem Antennenmodul verhindert wird.

Gemäß einer weiteren beispielhaften Ausführungsform sind in der Aufnahmeöffnung zwischen dem Grundkörper und dem Antennenmodul elastische Klemmelemente derart vorgesehen, dass eine lösbare Klemmbefestigung des Antennenmoduls in der Aufnahmeöffnung bereitstellbar ist. Die elastischen Klemmelemente können beispielsweise gummiartige Elemente darstellen. Die elastischen Klemmelemente werden beispielsweise in einem Spalt zwischen dem Grundkörper und dem Antennenmodul angeordnet. Je nach Elastizität und Größe des Klemmelements kann die gewünschte Klemmkraft eingestellt werden. Die Klemmkraft wird insbesondere derart konfiguriert, dass ein Lösen des Antennenmoduls aufgrund seines Eigengewichts und aufgrund von definierten Stoßbewegungen in vertikale Richtung bzw. in Richtung z-Achse das Antenne Modul nicht aus der Aufnahmeöffnung gelöst wird. Gleichzeitig reicht ein vertikaler Druck oder Zug, welcher händisch oder mittels eines Werkzeugs aufgebracht wird, dass Antennenmodul zu lösen. Somit kann eine einfache und schnelle Montage und Demontage des Antennenmoduls bereitgestellt werden.

Gemäß einer weiteren beispielhaften Ausführungsform weist das Antennenmodul in der Umfangsfläche eine Aufnahme zur Befestigung des Klemmelements auf. Das Klemmelement kann insbesondere zylinderförmig ausgebildet sein bzw. eine zylinderförmige Säule ausbilden. Entsprechend kann die Aufnahme eine Zylinderform mit einer kreisförmigen Grundfläche ausbilden. Alternativ kann das Klemmelement eine eckige, insbesondere 4-eckige, Grundfläche aufweisen und die Aufnahme korrespondierend ausgebildet werden.

Gemäß einer weiteren beispielhaften Ausführungsform weist das Antennenmodul im Bereich der Oberfläche des Grundkörpers eine Signalkoppelstelle derart auf, dass von der Signalkoppelstelle ein Antennensignal kontaktlos auf eine weitere Signalkoppelstelle des Dummys übertragbar ist. Der Dummy kann beispielsweise eine Antenne beabstandet von der Plattform aufweisen, sodass an einem geeigneteren. Die Antennensignale abgestrahlt werden können.

Erfindungsgemäß weist das Rollenelement eine Rollenachse auf, wobei das Rollenelement um die Rollenachse drehbar ist. Der Grundkörper weist an der Bodenfläche eine Rollenaufnahme zur Aufnahme der Rollenachse auf, wobei in der Rollenaufnahme ein elastisches Klemmelement derart angeordnet ist, dass eine Klemmbefestigung zwischen der Rollenaufnahme und dem Rollenelement bereitstellbar ist.

Das Klemmelement kann insbesondere zylinderförmig ausgebildet sein bzw. eine zylinderförmige Säule ausbilden. Entsprechend kann die Aufnahme eine Zylinderform mit einer kreisförmigen Grundfläche ausbilden. Alternativ kann das Klemmelement eine eckige, insbesondere 4-eckige, Grundfläche aufweisen und die Aufnahme korrespondierend ausgebildet werden.

Ähnlich wie das oben beschriebene Klemmelement für das Antennenmodul, kann das Klemmelement für das Rollenelement in einem Spalt zwischen der Aufnahme und dem Rollenelement angeordnet.

Gemäß einer weiteren beispielhaften Ausführungsform ist die Elastizität und/oder die Größe der Klemmelemente derart konfiguriert, dass erst bei einer Entkopplungskraft, die höher als die Gewichtskraft des Rollenelements ist, ein Lösen des Rollenelements von der Rollenaufnahme ermöglicht ist.

Je nach Elastizität und Größe des Klemmelements kann die gewünschte Klemmkraft eingestellt werden. Die Klemmkraft wird insbesondere derart konfiguriert, dass ein Lösen des Rollenelement aufgrund seines Eigengewichts und aufgrund von definierten Stoßbewegungen in vertikale Richtung bzw. in Richtung z-Achse das Rollenelement nicht aus der Rollenaufnahme gelöst wird. Gleichzeitig reicht ein geringer Kraftaufwand, um das Rollenelement von der Rollenaufnahme zu lösen, sodass eine einfache Montage und Demontage beispielsweise in einem Steckvorgang möglich sind.

Die Rollenaufnahme ist beispielsweise als Aufnahmegabel ausgebildet, sodass die Rollenachse des Rollenelements von dem Klemmelement in die Aufnahme geklemmt wird. Gemäß einer weiteren beispielhaften Ausführungsform ist das Rollenelement dann derart ausgebildet, dass sich das Rollenelement um die eingeklemmte Rollenachse dreht.

Gemäß einer weiteren beispielhaften Ausführungsform ist die Rollenaufnahme an dem Grundkörper drehbar um eine Drehachse angeordnet, wobei das Rollenelement exzentrisch und beabstandet von der Drehachse an der Rollenaufnahme befestigt ist. Somit kann bei Änderung der Fahrtrichtung der Plattform das Rollenelement zügig und ohne Widerstand in die neue Fahrtrichtung entlang rollen.

Gemäß einer weiteren beispielhaften Ausführungsform weist die Plattform ferner zumindest ein elektronisches Modul auf, welches in dem Grundkörper angeordnet ist, wobei das elektronische Modul ein elektronisches Bauteil, insbesondere mit einer Platine, aufweist. Das elektronische Modul weist ein flächiges viskoelastisches Dämpfungselement, insbesondere ein zylinderartiges Dämpfungselement, auf, an dem das elektronische Bauteil befestigt ist. Das elektronische Modul weist eine Trägerstruktur auf, an welchem das viskoelastische Dämpfungselement befestigt ist, sodass Vibrationen, welche von dem Grundkörper auf das elektronische Bauteil wirken, mittels des viskoelastischem Dämpfungselement dämpfbar sind.

Das Dämpfungselement weist beispielsweise eine zylindrische Form auf, auf deren Grundfläche bzw. Oberfläche die Platine bzw. das elektronische Bauteil aufgelegt und befestigt werden kann. Die Grundfläche des Dämpfungselements ist dabei parallel zu der Bodenfläche bzw. der Horizontalebene, wenn die Plattform auf dem Boden aufliegt. In z-Richtung bzw. in vertikaler Richtung kann sich das Dämpfungselement einfacher elastisch verformen als in Bodenebene, d. h. in y-Richtung oder x-Richtung, da das Dämpfungselement innerhalb der Bodenebene ein größeres Flächenträgheitsmoment aufweist.

Gemäß einer weiteren beispielhaften Ausführungsform sich das viskoelastische Dämpfungselement innerhalb einer Dämpfungsebene, deren Normale parallel ist zu der Normalen einer Bodenebene ist, derart erstreckt, dass das Dämpfungselement gegenüber einer Verformung senkrecht zur Normalen der Bodenebene steifer ist als gegenüber einer Verformung parallel zur Normalen der Bodenebene, sodass Vertikalkräfte, die sich parallel zur Normalen der Bodenebene erstrecken, mittels des viskoelastischem Dämpfungselement stärker dämpfbar sind als Horizontalkräfte, die sich senkrecht zur Normalen der Bodenebene erstrecken.

Entsprechend können beispielsweise Sensoren als elektronische Bauteile, die Stoßbewegungen der Plattformen korrekt gemessen, da kaum Dämpfung durch das Dämpfungselement verursacht wird. Stoßbewegungen in vertikaler Richtung, die messtechnisch störend sind, werden hingegen durch das Dämpfungselement gedämpft und das elektronische Bauteil somit schonender befestigt.

Gemäß einer weiteren beispielhaften Ausführungsform ist das viskoelastische Dämpfungselement mittels einer Befestigungsschraube an der Trägerstruktur befestigt, wobei die Befestigungsschraube insbesondere eine Einschraubrichtung parallel zur Normalen der Bodenebene aufweist. Das Dämpfungselement ist beispielsweise zylinderförmige und weist entlang seiner Mittelachse eine Durchgangsöffnung auf, durch welche entsprechend die Befestigungsschraube eingebracht werden kann.

Gemäß einer weiteren beispielhaften Ausführungsform ist die Oberfläche der Plattform zumindest bereichsweise reflektierend, insbesondere für Wärmestrahlung, ausgebildet. Die Oberfläche kann beispielsweise aus einem polierten Metall, insbesondere Stahl oder Aluminium, bestehen oder gegebenenfalls einem matt bzw. leicht spiegelartigen Material ausgebildet werden. Die Oberfläche kann beispielsweise sandgestrahlt oder säuregeätzt werden, um eine reflektierende und mit höheren Mittenrauwerten matt reflektierenden Oberfläche zu erreichen.

Die reflektierende Oberfläche kann einen Mittenrauwert Ra [µm (Mikrometer)] zwischen Ra ≥ 0.1 µm bis Ra ≥ 12.5 µm. Die reflektierende Oberfläche kann einen Mittenrauwert Ra von Ra ≥ 0.1 µm, insbesondere Ra ≥ 0.2 µm, Ra ≥ 1.6 µm oder Ra ≥ 12.5 µm, aufweisen. Insbesondere bei einem höheren Mittenrauwert Ra (z.B. zwischen Ra = 1.6 µm und Ra = 12.5 µm oder mehr) wird das Licht immer noch reflektiert, aber als diffuses Licht, sodass z.B. Wärmestrahlung der Sonne größtenteils reflektiert werden und andere Strahlung, wie beispielsweise Radarwellen zumindest teilweise absorbiert werden. Dabei ist die Oberfläche an den reflektierenden Bereichen leicht matt, sodass insbesondere Fotosensoren des zu testenden Fahrzeugs die matt reflektierende Oberfläche beispielsweise als asphaltähnliche Oberfläche wahrnehmen, sodass Fehlmessungen verhindert werden können.

Somit kann Wärmestrahlung, welche insbesondere von der Sonne generiert wird, reflektiert werden, sodass das Innere der Plattform nicht aufgewärmt wird und somit ein verbessertes Wärmemanagement möglich ist.

Gemäß einer beispielhaften Ausführungsform weist die reflektierende Oberfläche einen Reflexionsgrad von mehr als 80%, insbesondere mehr als 90% oder mehr als 95% aufweist. Reflexionsgrad bedeutet, dass von der Oberfläche von 100% an der Oberfläche ankommende Strahlung zu mehr als 80%, insbesondere mehr als 90% oder mehr als 95%, zurückgestrahlt bzw. reflektiert werden und nicht in die Plattform eingetragen bzw. absorbiert werden.

Gemäß einer beispielhaften Ausführungsform weist die Plattform ferner ein Reflexionselement (z.B. eine Reflexionsplatte) zur Reflexion von Strahlung, insbesondere Wärmestrahlung, auf. Das Reflexionselement verläuft, zumindest bereichsweise, entlang der Oberfläche des Grundkörpers mit einem Isolierabstand beabstandet, wobei insbesondere der Isolierabstand mit Luft oder mit einem Dämmmaterial zur Wärmedämmung gefüllt ist. Das Abschirmelement selbst kann ein Element mit aus einem Material mit geringer Wärmeleitfähigkeit sein. Der Isolierabstand weist beispielsweise 1mm bis 5mm auf.

Gemäß einer beispielhaften Ausführungsform weist die Plattform ferner ein Reflexionselement, das als Folie ausgebildet ist und beispielsweise mittels einer Klebeverbindung auf der Oberfläche der Plattform aufgeklebt ist.

Entsprechend kann die Folie bei Abnutzung oder Defekt ausgetauscht werden. Die Folie ist reflektierend, entsprechend dem oben beschriebenen Reflexionselement zur Reflexion von Strahlung, insbesondere Wärmestrahlung, ausgebildet (z.B. als Metallfolie oder Spiegelfolie.

Zudem kann insbesondere eine Plattform mit einer Kombination aus der reflektierenden Oberfläche und mit den strahlungsabsorbierenden Außenkantenbereichen bereitgestellt werden. Generell kann eine beispielhafte Ausführungsform der Plattform derart ausgebildet werden, dass alle Flächen, die parallel zur Bodenebene angeordnet sind, reflektierend insbesondere gegenüber Wärmestrahlung sind, während alle zur Bodenebene gewinkelten Flächen, wie beispielsweise die Oberfläche des Übergangsbereichs und die Außenkantenbereiche eine strahlungsabsorbierende Oberfläche aufweisen. Die horizontalen reflektierenden Flächen stören die Messgenauigkeit kaum, da die Wellen senkrecht bzw. vertikal reflektiert werden und somit nicht zu der Sensoreinheit zurückgeleitet werden. Gleichzeitig kann aus vertikaler Richtung eintretende Wärmestrahlung reflektiert werden, sodass das Wärmemanagement verbessert wird, ohne Messungenauigkeiten zu erzeugen. Eine Plattform, mit der oben beschriebenen Kombination an reflektierenden und absorbierenden Flächen, weist somit einen hohen Wirkungsgrad bezüglich Messgenauigkeit und Wärmemanagement auf.

Die Plattform weist ferner zumindest ein erstes Funktionsmodul und ein zweites elektronisches Funktionsmodul auf, welche in dem Grundkörper angeordnet sind. Ferner weist die Plattform eine Verbindungsplatine auf, die zwischen dem ersten und zweiten elektronischen Funktionsmodul und der Oberfläche des Grundkörpers angeordnet ist, wobei das erste und zweite elektronische Funktionsmodul jeweils an einer zur Oberfläche des Grundkörpers gerichteten Seite zumindest einen Kontaktstecker aufweist. Die Verbindungsplatine erstreckt sich entlang der Oberfläche zwischen dem ersten und zweiten elektronischen Funktionsmodul erstreckt und weist entsprechende Kontaktstellen zur Aufnahme der Kontaktstecker der ersten und zweiten elektronischen Funktionsmodule auf, sodass die Funktionsmodule vertikal auf die Verbindungsplatine aufsteckbar sind.

Ein Funktionsmodul bzw. funktionale Elemente können beispielsweise aktive elektronische Komponenten beschreiben, die Signale und elektrische Leistung beziehen oder abgeben, wie beispielsweise die Antriebseinheiten, Batteriemodule oder Kommunikationseinheiten. Die Funktionsmodule sind beispielsweise durch eine Aufnahmeöffnung durch die Oberfläche oder die Bodenfläche der Plattform in ihre gewünschte Position montierbar. Die Funktionsmodule sind insbesondere miteinander zum Signalaustausch und zum Austausch von elektrischer Leistung gekoppelt. Dies wird mit der vorliegenden beispielhaften Ausführungsform mittels der Verbindungsplatine durchgeführt.

Die Verbindungsplatine ist insbesondere aus einem Substrat, wie beispielsweise aus FR4, hergestellt. Auf dem Substrat sind Leiterbahnen ausgebildet, beispielsweise aufgedruckt, die einen vorgegebenen Pfad zwischen zwei Funktionsmodulen bilden. Die Verbindungsplatine weist insbesondere keine aktiven Schaltelemente auf, sondern ausschließlich Leiterbahnen.

Die Verbindungsplatine weist Kontaktstellen auf, die durch die Aufnahmeöffnung der Plattform insbesondere in vertikaler Steckrichtung erreichbar sind. Die Funktionsmodule weisen entsprechende Kontaktstecker auf, die ebenfalls in vertikaler Richtung zugänglich sind. Mit anderen Worten weist die Verbindungsplatine zwei gegenüberliegende Hauptflächen auf, an deren die Kontaktstellen ausgebildet sind. Die Leiterbahnen der Verbindungsplatine sind derart ausgebildet, dass die Kontaktstellen zum Austausch elektrischer Leistung und elektrische Signale verbunden sind. Im eingesteckten Zustand der Funktionsmodule an die Leiterplatine sind diese somit über die Leiterplatine elektronisch verbunden. Weitere freie Drahtverbindungen zwischen den Funktionsmodulen sind nicht notwendig. So kann beispielsweise die Leistungsplatine an einer Stelle und ein Kommunikationsmodul oder die Antriebseinheit an einer anderen Stelle in der Plattform an der Verbindungsplatine angeschlossen sein, sodass ohne eine Drahtverbindung aufgrund der Leiterbahnen in der Verbindungsplatine die Funktionsmodule miteinander verbunden sind. Somit können die Funktionsmodule in vertikaler Steckrichtung einfach an einer vorbestimmten Stelle an die Verbindungsplatine angesteckt werden entsprechend in einfacher Art und Weise ausgetauscht werden. Sich abnutzen der Drahtverbindungen können somit weitestgehend vermieden werden. Die Verbindungsplatine erstreckt sich beispielsweise in Bodenebene zum Beispiel über insbesondere mehr als 50 % des Installationsbereichs, insbesondere über den gesamten Installationsbereich.

Im Folgenden werden einige Aspekte erläutert, welche abhängig oder unabhängig von der vorrangig beschriebenen Plattform eine dünne Ausbildung der Plattform ermöglichen. Alle im folgenden beschriebenen Aspekte können den oben beschriebenen beispielhaften Ausführungsformen kombiniert werden.

Gemäß einem weiteren Aspekt wird eine Plattform für einen Dummy zum Simulieren von Verkehrssituationen beschrieben. Die Plattform weist einen Grundkörper, welcher eine Bodenfläche und eine gegenüber der Bodenfläche ausgebildete Oberfläche aufweist, und zumindest ein Rollenelement auf, welches an der Bodenfläche angeordnet ist, wobei das Rollenelement derart ausgebildet ist, dass der Grundkörper mittels des Rollenelements entlang eines Bodens verfahrbar ist. Die Plattform weist ferner einen Antriebsstrang auf, der eine Antriebseinheit aufweist, wobei das Rollenelement mit der Antriebseinheit zum Übertragen eines Antriebsmoments gekoppelt ist. Der Antriebsstrang und das Rollenelement sind entlang einer Axialrichtung hintereinander derart gekoppelt sind, dass der Antriebsstrang zusammen mit dem Rollenelement zumindest teilweise in einer Aufnahmeöffnung in der Bodenfläche des Grundkörpers vorliegt, wobei der Antriebsstrang mit dem Rollenelement in die Aufnahmeöffnung hinein- und herausschwenkbar angeordnet ist.

Gemäß einem weiteren Aspekt wird eine Plattform für einen Dummy zum Simulieren von Verkehrssituationen beschrieben. Die Plattform weist einen Grundkörper, welcher eine Bodenfläche und eine gegenüber der Bodenfläche ausgebildete Oberfläche aufweist, und zumindest ein Rollenelement auf, welches an der Bodenfläche angeordnet ist, wobei das Rollenelement derart ausgebildet ist, dass der Grundkörper mittels des Rollenelements entlang eines Bodens verfahrbar ist. Die Plattform weist ferner eine Leistungsplatine, welche in dem Grundkörper, insbesondere in dem Installationsbereich, angeordnet ist, und zumindest eine Batteriezelle auf, welche mit der Leistungsplatine derart gekoppelt ist, dass die Leistungsplatine ein Laden der und einen Strombezug von der Batteriezelle ermöglicht.

Gemäß einem weiteren Aspekt wird eine Plattform für einen Dummy zum Simulieren von Verkehrssituationen beschrieben. Die Plattform weist einen Grundkörper, welcher eine Bodenfläche und eine gegenüber der Bodenfläche ausgebildete Oberfläche aufweist, und zumindest ein Rollenelement auf, welches an der Bodenfläche angeordnet ist, wobei das Rollenelement derart ausgebildet ist, dass der Grundkörper mittels des Rollenelements entlang eines Bodens verfahrbar ist. Die Plattform weist ferner zumindest ein Antennenmodul, insbesondere ein WLAN oder ein GPS Antennenmodul, auf, wobei der Grundkörper an der Oberfläche eine Aufnahmeöffnung aufweist, in welcher das Antennenmodul angeordnet ist.

Erfindungsgemäß wird eine Plattform für einen Dummy zum Simulieren von Verkehrssituationen beschrieben. Die Plattform weist einen Grundkörper, welcher eine Bodenfläche und eine gegenüber der Bodenfläche ausgebildete Oberfläche aufweist, und zumindest ein Rollenelement auf, welches an der Bodenfläche angeordnet ist, wobei das Rollenelement derart ausgebildet ist, dass der Grundkörper mittels des Rollenelements entlang eines Bodens verfahrbar ist. Das Rollenelement weist eine Rollenachse auf, wobei das Rollenelement um die Rollenachse drehbar ist. Der Grundkörper weist an der Bodenfläche eine Rollenaufnahme zur Aufnahme der Rollenachse auf, wobei in der Rollenaufnahme ein elastisches Klemmelement derart angeordnet ist, dass eine Klemmbefestigung zwischen der Rollenaufnahme und dem Rollenelement bereitstellbar ist.

Gemäß einem weiteren Aspekt wird eine Plattform für einen Dummy zum Simulieren von Verkehrssituationen beschrieben. Die Plattform weist einen Grundkörper, welcher eine Bodenfläche und eine gegenüber der Bodenfläche ausgebildete Oberfläche aufweist, und zumindest ein Rollenelement auf, welches an der Bodenfläche angeordnet ist, wobei das Rollenelement derart ausgebildet ist, dass der Grundkörper mittels des Rollenelements entlang eines Bodens verfahrbar ist. Die Plattform weist ferner zumindest ein elektronisches Modul auf, welches in dem Grundkörper angeordnet ist, wobei das elektronische Modul ein elektronisches Bauteil, insbesondere mit einer Platine, aufweist. Das elektronische Modul weist ein flächiges viskoelastisches Dämpfungselement, insbesondere ein zylinderartiges Dämpfungselement, auf, an dem das elektronische Bauteil befestigt ist. Das elektronische Modul weist eine Trägerstruktur auf, an welchem das viskoelastische Dämpfungselement befestigt ist, sodass Vibrationen, welche von dem Grundkörper auf das elektronische Bauteil wirken, mittels des viskoelastischem Dämpfungselement dämpfbar sind.

Gemäß einem weiteren Aspekt wird eine Plattform für einen Dummy zum Simulieren von Verkehrssituationen beschrieben. Die Plattform weist einen Grundkörper, welcher eine Bodenfläche und eine gegenüber der Bodenfläche ausgebildete Oberfläche aufweist, und zumindest ein Rollenelement auf, welches an der Bodenfläche angeordnet ist, wobei das Rollenelement derart ausgebildet ist, dass der Grundkörper mittels des Rollenelements entlang eines Bodens verfahrbar ist. Die Oberfläche der Plattform ist zumindest bereichsweise reflektierend, insbesondere für Wärmestrahlung, ausgebildet.

Gemäß einem weiteren Aspekt wird eine Plattform für einen Dummy zum Simulieren von Verkehrssituationen beschrieben. Die Plattform weist einen Grundkörper, welcher eine Bodenfläche und eine gegenüber der Bodenfläche ausgebildete Oberfläche aufweist, und zumindest ein Rollenelement auf, welches an der Bodenfläche angeordnet ist, wobei das Rollenelement derart ausgebildet ist, dass der Grundkörper mittels des Rollenelements entlang eines Bodens verfahrbar ist. Die Plattform weist ferner zumindest ein erstes Funktionsmodul und ein zweites elektronisches Funktionsmodul auf, welche in dem Grundkörper angeordnet sind. Ferner weist die Plattform eine Verbindungsplatine auf, die zwischen dem ersten und zweiten elektronischen Funktionsmodul und der Oberfläche des Grundkörpers angeordnet ist, wobei das erste und zweite elektronische Funktionsmodul jeweils an einer zur Oberfläche des Grundkörpers gerichteten Seite zumindest einen Kontaktstecker aufweist. Die Verbindungsplatine erstreckt sich entlang der Oberfläche zwischen dem ersten und zweiten elektronischen Funktionsmodul erstreckt und weist entsprechende Kontaktstellen zur Aufnahme der Kontaktstecker der ersten und zweiten elektronischen Funktionsmodule auf, sodass die Funktionsmodule vertikal auf die Verbindungsplatine aufsteckbar sind.

Es wird darauf hingewiesen, dass die hier beschriebenen Ausführungsformen lediglich eine beschränkte Auswahl an möglichen Ausführungsvarianten der Erfindung darstellen. So ist es möglich, die Merkmale einzelner Ausführungsformen in geeigneter Weise miteinander zu kombinieren, so dass für den Fachmann mit den hier expliziten Ausführungsvarianten eine Vielzahl von verschiedenen Ausführungsformen als offensichtlich offenbart anzusehen sind. Insbesondere sind einige Ausführungsformen der Erfindung mit Vorrichtungsansprüchen und andere Ausführungsformen der Erfindung mit Verfahrensansprüchen beschrieben. Dem Fachmann wird jedoch bei der Lektüre dieser Anmeldung sofort klar werden, dass, sofern nicht explizit anders angegeben, zusätzlich zu einer Kombination von Merkmalen, die zu einem Typ von Erfindungsgegenstand gehören, auch eine beliebige Kombination von Merkmalen möglich ist, die zu unterschiedlichen Typen von Erfindungsgegenständen gehören.

### Kurze Beschreibung der Zeichnungen

Im Folgenden werden zur weiteren Erläuterung und zum besseren Verständnis der vorliegenden Erfindung Ausführungsbeispiele unter Bezugnahme auf die beigefügten Zeichnungen näher beschrieben.
Fig. 1 zeigt eine schematische Darstellung einer Seitenansicht einer verfahrbaren Plattform gemäß einer beispielhaften Ausführungsform
Fig. 2 zeigt eine schematische Darstellung einer Draufsicht der Plattform aus Fig. 1.
Fig. 3 zeigt schematische Darstellung eines schwenkbaren Antriebsstrangs gemäß einer beispielhaften Ausführungsform.
Fig. 4 zeigt eine schematische Darstellung eines schwenkbaren Antriebsstrangs mit Schwenkfedern gemäß einer beispielhaften Ausführungsform.
Fig. 5 zeigt eine schematische Darstellung einer Kopplung eines Rollenelements an dem Antriebsstrang gemäß einer beispielhaften Ausführungsform.
Fig. 6 zeigt eine schematische Darstellung einer Befestigung eines Rollenelements an einer Rollenbefestigungseinheit mittels Klemmelementen gemäß einer beispielhaften Ausführungsform.
Fig. 7 zeigt eine schematische Darstellung einer Leistungsplatine mit Batteriezellen gemäß einer beispielhaften Ausführungsform.
Fig. 8 zeigt eine schematische Darstellung einer Befestigung von Antennenmodulen in der Plattform gemäß einer beispielhaften Ausführungsform.
Fig. 9 zeigt eine schematische Darstellung einer Strahlungscharakteristik eines Antennenmoduls gemäß einer beispielhaften Ausführungsform
Fig. 10 zeigt eine schematische Darstellung eines Antennenmoduls gemäß einer beispielhaften Ausführungsform der vorliegenden Erfindung.
Fig. **11** zeigt eine schematische Darstellung einer Verbindungsplatine, welche in dem Grundkörper installiert ist, gemäß einer beispielhaften Ausführungsform.
Fig. 12 zeigt eine schematische Darstellung eines elektronischen Moduls mit einer Dämpfungsmechanik gemäß einer beispielhaften Ausführungsform.
Fig. 13 zeigt eine schematische Darstellung einer Befestigung eines Rollenelements an den Grundkörper der Platine gemäß einer beispielhaften Ausführungsform.

### Detaillierte Beschreibung von exemplarischen Ausführungsformen

Gleiche oder ähnliche Komponenten in unterschiedlichen Figuren sind mit gleichen Bezugsziffern versehen. Die Darstellungen in den Figuren sind schematisch.

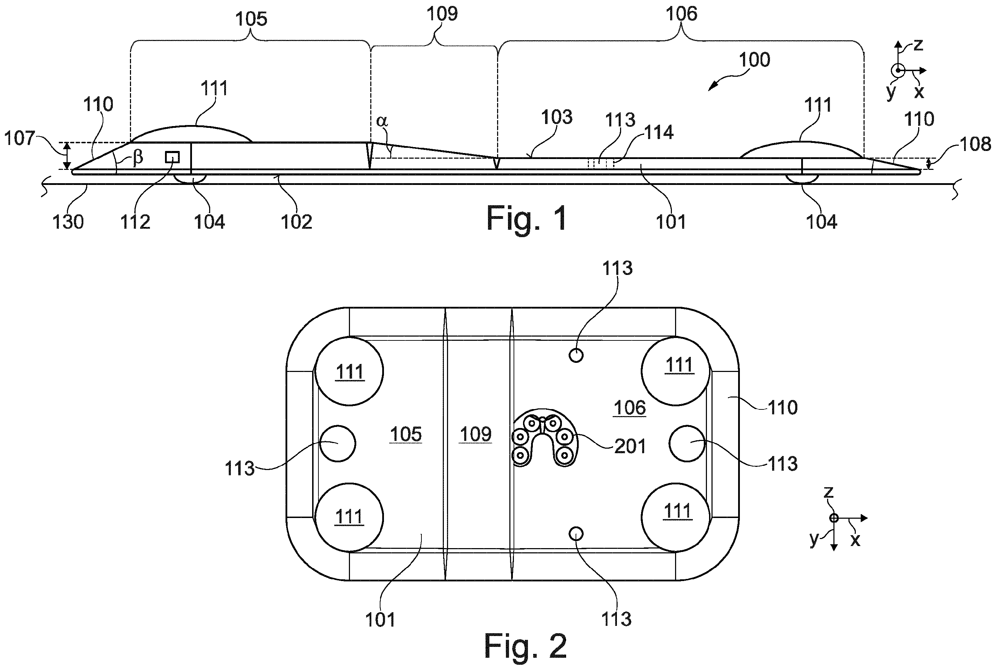

**Fig. 1** zeigt eine schematische Darstellung einer Seitenansicht einer verfahrbaren Plattform 100 gemäß einer beispielhaften Ausführungsform. **Fig. 2** zeigt eine schematische Darstellung einer Draufsicht der Plattform 100 aus Fig. 1. Die Plattform 100 weist einen Grundkörper 101, welcher eine Bodenfläche 102 und eine gegenüber der Bodenfläche 102 ausgebildete Oberfläche 103 aufweist, und zumindest ein Rollenelement 104 auf, welches an der Bodenfläche 102 103 angeordnet ist, wobei das Rollenelement 104 104 derart ausgebildet ist, dass der Grundkörper 101 mittels des Rollenelements 104 entlang eines Bodens 130 verfahrbar ist, wobei der Grundkörper 101 einen Befestigungsbereich 106 und einen Installationsbereich 105 aufweist. Auf der Befestigungsoberfläche des Befestigungsbereichs 106 ist eine Befestigungsvorrichtung 201 zum Befestigen des Dummys ausgebildet, wobei in dem Installationsbereich 105 funktionale Elemente installierbar sind. Der Grundkörper 101 ist derart dünn ausgebildet, dass ein Kollisionsfahrzeug schadlos über den Grundkörper 101 fahren kann.

Der Grundkörper 101 weist dabei eine Bodenfläche 102 und eine gegenüberliegende Oberfläche 103 auf. Der Grundkörper 101 wird mit seiner Bodenfläche 102 auf einem Boden 130 aufgelegt. In diesem Fall ist die Bodenfläche 102 parallel zum Boden 130 bzw. zur Bodenebene. In der Bodenfläche 102 ist das zumindest eine Rollenelement 104 drehbar angeordnet, welches zumindest teilweise aus dem Grundkörper 101 hinausragt und somit einen Abstand zwischen Grundkörper 101 und Boden 130 bereitstellt. Auf der Oberfläche 103 ist eine Befestigungsvorrichtung 201 ausgebildet. Die Befestigungsvorrichtung 201 ist konfiguriert, um den Dummy zu fixieren. Ferner kann die Befestigungsvorrichtung 201 steuerbar ausgebildet sein, um das Testobjekt selektiv, beispielsweise kurz vor einer Aufprallsituation, freizugeben, sodass die Befestigung zwischen dem Grundkörper 101 und dem Testobjekt gelöst ist. Die Bodenebene wird von einer x-Achse (beispielsweise in Fahrtrichtung der Plattform 100) und einer Y-Achse definiert. Die x-Achse und Y-Achse liegen somit in der Bodenebene. Senkrecht zur Bodenebene und somit parallel zur Normalen der Bodenebene verläuft die z-Achse (vertikal).

Die Plattform 100 weist insbesondere einen Installationsbereich 105 auf, indem alle funktionalen Elemente bzw. Funktionsmodule, wie beispielsweise die Antriebseinheiten oder Kommunikationseinheiten, der Plattform 100 angeordnet sind. In dem Befestigungsbereich 106 wird auf der Befestigungsoberfläche der Dummy befestigt. Entlang der Bodenebene ist die Plattform 100 in den Befestigungsbereich 106 und den Installationsbereich 105 unterteilt.

Der Grundkörper 101 ist derart stufenförmig ausgebildet, dass eine Installationsdicke 107 zwischen der Bodenfläche 102 und der Oberfläche 103 in dem Installationsbereich 105 größer ist als eine Befestigungsdicke 108 zwischen der Bodenfläche 102 und der Oberfläche 103 in dem Befestigungsbereich 106.

Somit weist die Plattform 100 zwei unterschiedliche Dickenbereiche auf. In dem dickeren Installationsbereich 105 werden die funktionalen Elemente untergebracht, die in der Regel eine größere Dicke benötigen. In dem Befestigungsbereich 106, auf welchem der Dummy befestigt ist, befinden sich beispielsweise ausschließlich antriebslose Rollenelemente 104, sodass keine weiteren dickeren funktionalen Elemente verbaut werden müssen. Der Befestigungsbereich 106 kann somit dünner als der Installationsbereich 105 ausgebildet werden.

Zwischen dem Installationsbereich 105 und dem Befestigungsbereich 106 ist ein Übergangsbereich 109 ausgebildet ist, wobei die Oberfläche 103 in dem Übergangsbereich 109 einen Winkel a zur Oberfläche 103 in dem Installationsbereich 105 (und/oder dem Befestigungsbereich 106 zwischen 5° und 45°, insbesondere zwischen 5° und 15°, aufweist. Der Winkel α wird insbesondere zwischen der Ebene (oder deren Normalen), in welcher der Übergangsbereich 109 liegt, und der Bodenebene (oder deren Normalen) gemessen. Insbesondere bei Ausbildung des Übergangsbereichs 109 mit einem schrägen, geneigten Verlauf, kann eine direkte Rückstrahlung von Sensorstrahlen, wie beispielsweise Radarwellen, vermieden werden.

Der Grundkörper 101 weist Außenkantenbereiche 110 auf, die den Befestigungsbereich 106 und/oder den Installationsbereich 105 umgeben, wobei die Außenkantenbereiche 110 keilförmig ausgebildet sind und wobei zumindest ein keilförmiger Außenkantenbereich 110 einen Öffnungswinkel β von ungefähr unter 25° aufweist. Die keilförmigen Außenkantenbereiche 110 bilden somit eine Rampe über die das Kollisionsfahrzeug schonend auf die Deckfläche bzw. die Oberfläche 103 der Plattform 100 gelangen kann und die gesamte Plattform 100 überfahren kann. Der Öffnungswinkel β wird insbesondere zwischen der Bodenebene (bzw. deren normalen) und der Ebene (bzw. deren normalen), in welcher die Oberfläche 103 der keilförmigen Außenkantenbereiche 110 verläuft, gemessen. Ebenso wird durch die keilförmigen Außenkantenbereiche 110 eine Reflexion von Sensorstrahlung mit einer vertikalen Komponente zurück reflektiert, sodass das Risiko von Fehlmessungen reduziert wird. Die Außenkantenbereiche 110 weisen eine strahlungsabsorbierende, insbesondere radarwellenabsorbierende, Oberfläche 103, insbesondere mit dem Farbton RAL 7005 oder RAL 7035, auf.

Die Oberfläche 103 weist im Bereich des Rollenelements 104 ein kuppelförmiges Abdeckelement auf. Somit können trotz eines schmalen Installationsbereich 105 Rollenelemente 104 mit einem größeren Rollenradius verwendet werden. Der dazu notwendige Installationsraum kann durch die kuppelförmigen Abdeckelemente erzeugt werden. Aufgrund der Kuppelform werden zudem die Sensorstrahlungen nicht direkt zurückgestrahlt, sondern mit einer vertikalen Komponente, sodass Fehlmessungen reduziert werden.

Die Oberfläche 103 der Plattform 100 ist zumindest bereichsweise reflektierend, insbesondere für Wärmestrahlung, ausgebildet. Die Oberfläche 103 kann beispielsweise aus einem polierten Metall bestehen oder gegebenenfalls einem spielartigen Material ausgebildet werden. Somit kann Wärmestrahlung, welche insbesondere von der Sonne generiert wird, reflektiert werden, sodass das Innere der Plattform 100 nicht aufgewärmt wird und somit ein verbessertes Wärmemanagement möglich ist. Die Plattform 100 kann derart ausgebildet werden, dass alle Flächen, die parallel zur Bodenebene angeordnet sind, reflektierend insbesondere gegenüber Wärmestrahlung sind, während alle zur Bodenebene gewinkelten Flächen, wie beispielsweise die Oberfläche 103 des Übergangsbereichs 109 und die Außenkantenbereiche 110 eine strahlungsabsorbierende Oberfläche 103 aufweisen.

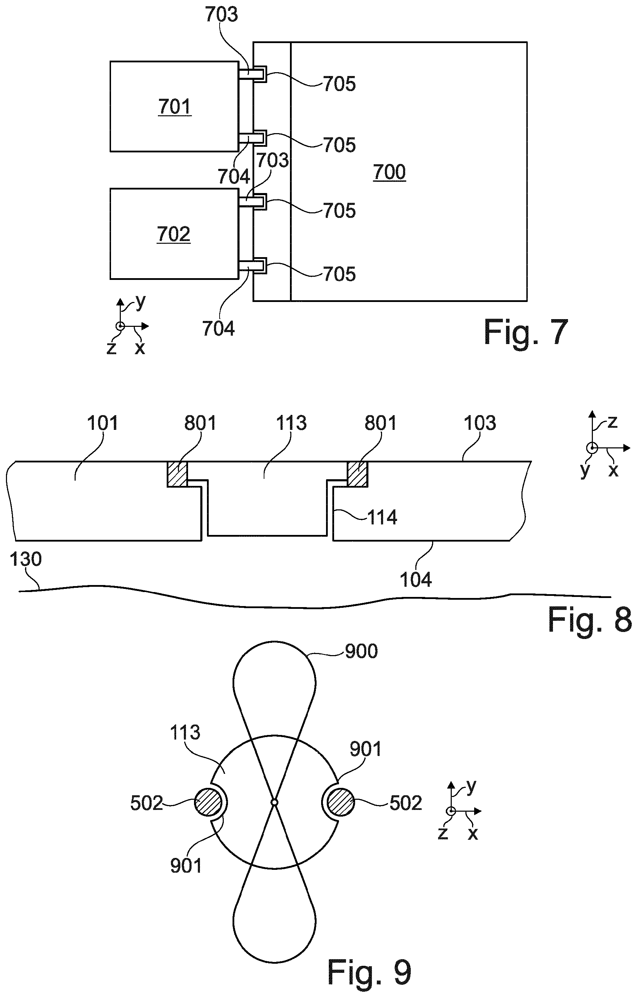

Gemäß einer weiteren beispielhaften Ausführungsform weist der Grundkörper 101 zumindest zwei elektrischen Kontaktflächen 112 auf, die von außerhalb der Plattform 100 frei zugänglich sind. Die Kontaktflächen 112 sind mit einer Leistungsplatine 700 (siehe Fig. 7) stromleitend verbunden, wobei die zwei elektrischen Kontaktflächen 112 insbesondere derart ausgebildet sind, dass Schleifkontakte mit Kontaktstellen einer stationären Ladestation bereitstellbar sind. Beispielsweise kann die Plattform 100 in eine Ladestation einfahren und bei einer gewissen Ladeposition eine elektrische Kontaktierung zwischen den Schleifkontakt der Plattform 100 und den Schleifkontakt in der Ladestation herstellen.

Die Plattform 100 weist ferner zumindest ein Antennenmodul 113, insbesondere ein WLAN oder ein GPS Antennenmodul 113, auf, wobei der Grundkörper 101 an der Oberfläche 103 eine Aufnahmeöffnung 114 aufweist, in welcher das Antennenmodul 113 angeordnet ist.

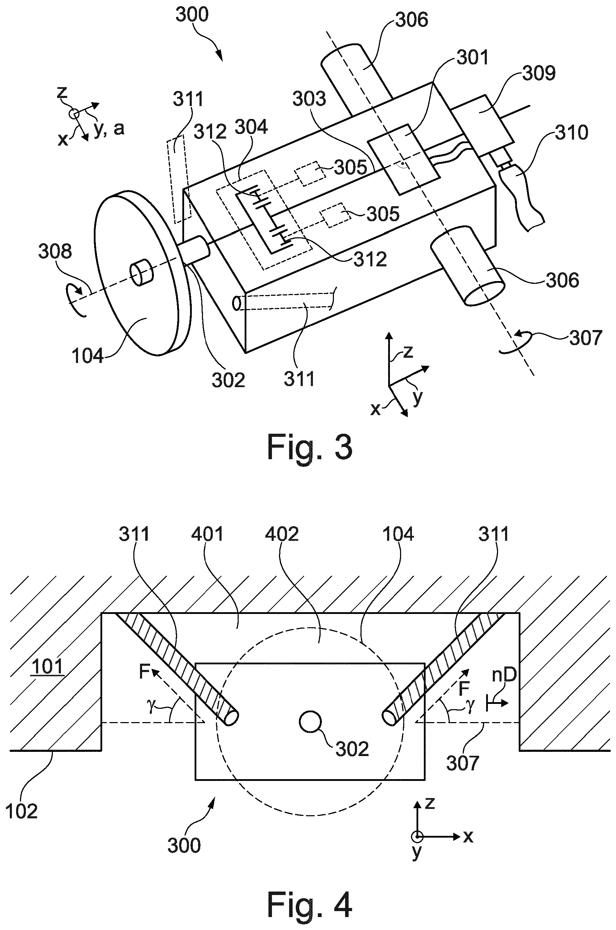

**Fig. 3** zeigt schematische Darstellung eines schwenkbaren Antriebsstrangs 300 gemäß einer beispielhaften Ausführungsform. Die Plattform 100 weist ferner einen Antriebsstrang 300 auf, der eine Antriebseinheit 301 aufweist, wobei das Rollenelement 104 mit der Antriebseinheit 301 zum Übertragen eines Antriebsmoments gekoppelt ist. Der Antriebsstrang 300 und das Rollenelement 104 sind entlang einer Axialrichtung a hintereinander derart gekoppelt sind, dass der Antriebsstrang 300 zusammen mit dem Rollenelement 104 zumindest teilweise in einer Aufnahmeöffnung 401 in der Bodenfläche 102 des Grundkörpers 101 vorliegt, wobei der Antriebsstrang 300 mit dem Rollenelement 104 in die Aufnahmeöffnung 401 (siehe Fig. 4) hinein- und herausschwenkbar angeordnet ist.

Der Antriebsstrang 300 kann beispielsweise ein Gehäuse bzw. eine tragende Struktur aufweisen, in welcher alle funktionalen mechanischen Komponenten, wie beispielsweise die Antriebseinheit 301 oder Lagerungen für die Wellen angeordnet sind. Der Antriebsstrang 300 ist erfindungsgemäß schwenkbar an den Grundkörper 101 angeordnet, sodass bei Last (insbesondere Gewichtskraft durch ein überfahren des Kollisionsfahrzeug, in vertikaler Richtung, der Antriebsstrang 300 zusammen mit dem Rollenelement 104 in Richtung Plattform 100 geschwenkt wird, um die Lastbeanspruchung zu dämpfen und gegebenenfalls das Rollenelement 104 zusammen mit dem Antriebsstrang 300 in einem Aufnahmebereich, beispielsweise in einer Installationsbox, sicher aufzubewahren, sodass keine weitere Gewichtskraft des Kollisionsfahrzeugs auf den Antriebsstrang 300 und das Rollenelement 104 übertragen wird. Ist insbesondere möglich, wenn in einem eingeschwenkten Zustand des Antriebsstrang 300 und des Rollenelement 104 in einen Aufnahmebereich der Plattform 100 bzw. des Grundkörpers 101 die gesamte Gewichtskraft der Plattform 100 und des überfahren den Kollisionsfahrzeugs über den Grundkörper 101 in dem Boden 130 eingeleitet wird und nicht länger über das Rollenelement 104. Somit kann eine dünne Plattform 100, die äußerst robust gegenüber schweren Kollisionsfahrzeugen (zum Beispiel Schwerlast LKWs) bereitgestellt werden.

Die Antriebseinheit 301 weist eine Antriebswelle 303 und das Rollenelement 104 eine Drehwelle 302 auf, wobei die Antriebseinheit 301 und das Rollenelement 104 derart angeordnet sind, dass die Antriebswelle 303 und die Drehwelle 302 parallel zur Axialrichtung a verlaufen. Die Antriebseinheit 301 und das Rollenelement 104 sind derart angeordnet, dass die Antriebswelle 303 und die Drehwelle 302 koaxial verlaufen.

Der Antriebsstrang 300 weist eine Getriebeeinheit 304, insbesondere ein Planetengetriebe, auf, welches zwischen der Antriebswelle 303 und der Drehwelle 302 derart angeordnet ist, dass ein Antriebsmoment der Antriebswelle 303 auf die Drehwelle 302 übersetzt übertragbar ist. Somit können beispielsweise leistungsschwächere Antriebseinheiten 301, 305 (Elektromotoren) eingesetzt werden, um dennoch genügend Antriebsmoment für das Rollenelement 104 zu erzeugen.

Der Antriebsstrang 300 weist eine weitere Antriebseinheit 305 (zum Beispiel einen weiteren Elektromotor) auf, wobei die weitere Antriebseinheit 305 derart an die Getriebeeinheit 304 gekoppelt ist, dass ein weiteres Antriebsmoment von der Antriebswelle 303 auf die Drehwelle 302 übersetzt übertragbar ist. Insbesondere kann die Antriebseinheit 301 und die weitere Antriebseinheit 305 in Serie angeordnet werden und somit entlang einer gemeinsamen Axialrichtung a das Antriebsmoment auf die Antriebswelle 303 erzeugen. Alternativ kann die Antriebseinheit 301 und die weitere Antriebseinheit 305 parallel geschaltet werden und somit nebeneinander, beispielsweise wie im Folgenden beschrieben über ein Planetengetriebe, die entsprechenden Antriebsmomente auf die Antriebswelle 303 übertragen.

Die Getriebeeinheit 304 weist ein Planetengetriebe mit zumindest einem ersten und einem zweiten Planetenrad 312 auf, wobei die Antriebseinheit 301 das erste Planetenrad 312 und die weitere Antriebseinheit 305 an das zweite Planetenrad 312 gekoppelt ist (siehe gestrichelte Darstellung in Fig. 3). Die Drehwelle 302 ist beispielsweise ein umlaufendes Hohlrad, auf dessen Innenseite die Planetenräder 312 laufen.

Der Antriebsstrang 300 weist, insbesondere an einem axialen Ende, einen Drehpin 306, welcher eine Schwenkachse 307 ausbildet, auf, wobei der Drehpin 306 mit dem Grundkörper 101 gekoppelt ist. Die Schwenkachse 307 verläuft quer zur Axialrichtung a des Antriebsstrangs 300. Insbesondere wird der Drehpin 306 mittels einer Gleitlagerung mit dem Grundkörper 101 gekoppelt. Alternativ können zusätzlich Kugel- oder Walzlager verwendet werden.

Der Antriebsstrang 300 weist an dem axialen Ende eine elektrische Koppelstelle 309 auf zum Ankoppeln eines elektrischen Steckers 310. Insbesondere wird die Koppelstelle 309 in dem Bereich der Schwenkachse 307 gebildet, sodass beim Schwenken des Antriebsstrangs 300 kaum eine relative Bewegung der Koppelstelle 309 und somit des elektrischen Steckers erzeugt wird.

Eine Schwenkfeder 311 ist zwischen dem Antriebsstrang 300 und dem Grundkörper 101 derart angeordnet, dass eine Schwenkbewegung des Antriebsstrangs 300 relativ zum Grundkörper 101 definiert dämpfbar ist.

**Fig. 4** zeigt eine schematische Darstellung eines schwenkbaren Antriebsstrangs 300 mit Schwenkfedern 311 gemäß einer beispielhaften Ausführungsform.

Die Schwenkfedern 311 weisen eine degressive Federkennlinie auf, die mit Zunahme der Einfederung des Antriebsstrangs 300 in die Aufnahmeöffnung 401 die Federkraft verringert. Die Schwenkfeder 311, insbesondere als Schraubenfeder, weist eine Federkraft F entlang einer Federkraftrichtung, wobei die Schwenkfeder 311 derart zwischen dem Grundkörper 101 und dem Antriebsstrang 300 angeordnet ist, dass die Federkraft einen Winkel γ zwischen 20° und 70°, insbesondere zwischen 40° und 50°, aufweist.

Die Schwenkrichtung verläuft tangential umfänglich um die Schwenkachse 307. Im Wesentlichen verläuft die Schwenkrichtung mit einer vertikalen Komponente, insbesondere vertikal. Ferner läuft die Schwenkrichtung innerhalb einer Dämpfungsebene gebildet, die durch die y-z-Achsen gebildet wird und eine Normale nS parallel zur x-Achse aufweist. Die Gewichtskraft der Plattform 100 und des überfahrenden Kollisionsfahrzeugs verläuft vertikal, parallel zur Normalen der Bodenebene. Die Schwenkfeder 311 ist derart schräg zur Normalen der Bodenebene angeordnet, dass die Federkraft der Schwenkfeder 311 und entsprechend die Erstreckungsrichtung der Schwenkfeder 311 nicht parallel zur Schwenkrichtung bzw. der Normalen nS und nicht parallel zur Gewichtskraft verläuft, sondern ebenfalls mit dem vorgegebenen Winkel γ. Dies führt dazu, dass bei Einfedern des Antriebsstrangs 300 in Schwenkrichtung die Schwenkfeder 311 zusammengedrückt wird und aufgrund der Gewichtskraft Belastung die Schwenkfeder 311 definiert ausknickt. Dieses Ausknicken führt dazu, dass die Federkraft reduziert wird und entsprechend bei höherem Federweg eine geringere Federkraft aufgrund des Einknickens eingestellt wird. Dies erzeugt entsprechend die degressive Federkennlinie.

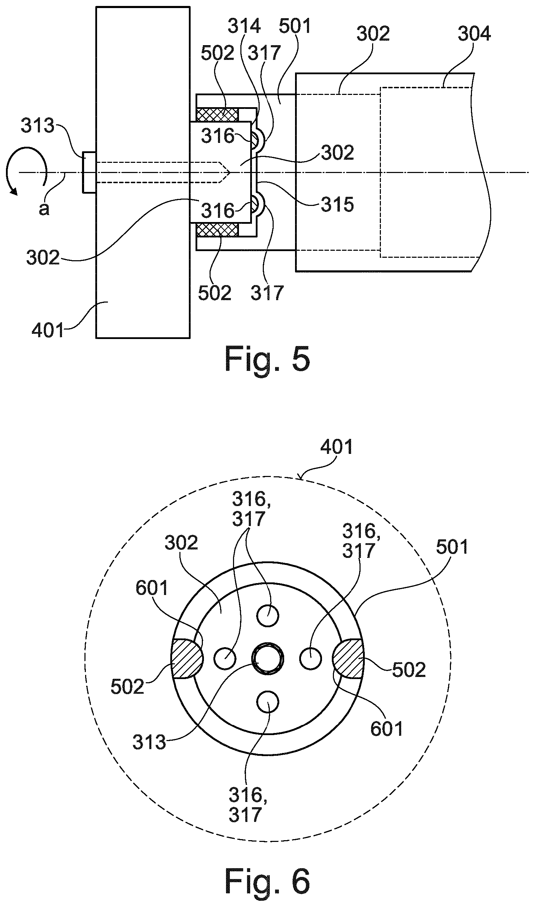

**Fig. 5** zeigt eine schematische Darstellung einer Kopplung eines Rollenelements 104 an dem Antriebsstrang 300 gemäß einer beispielhaften Ausführungsform.

Der Antriebsstrang 300 weist eine Rollenbefestigungseinheit 501 auf, an welcher das Rollenelement 104 austauschbar befestigbar ist, wobei die Rollenbefestigungseinheit 501 um die Axialrichtung a drehbar ist. Die Rollenbefestigungseinheit 501 es beispielsweise an der Antriebswelle 303 drehfest gekoppelt, sodass bei Drehung der Antriebswelle 303 ebenfalls die Rollenbefestigungseinheit 501 gedreht wird. An der Rollenbefestigungseinheit 501 befinden sich beispielsweise Aufnahmebohrungen für ein Befestigungselement, um das Rollenelement 104 mit diesem an die Rollenbefestigungseinheit 501 drehfest zu befestigen.

Das Rollenelement 104 ist mittels einer, insbesondere mittels ausschließlich einer, Befestigungsschraube 313 an der Rollenbefestigungseinheit 501 lösbar befestigbar, wobei die Einschraubrichtung der Befestigungsschraube 313 insbesondere parallel zur Axialrichtung a (der Drehwelle 302 und der Antriebswelle 303) ausgebildet ist. Insbesondere kann die Antriebswelle 303 und die Drehteller koaxial sein und eine gemeinsame Axialrichtung a aufweisen. Die Rollenbefestigungseinheit 501 weist insbesondere in ihrem Zentrum bzw. Mittelpunkt eine in Axialrichtung a erstreckende Aufnahmebohrung auf. Das Rollenelement 104 weist im Mittelpunkt eine Durchgangsöffnung auf, durch welche die Befestigungsschraube 313 hindurch gesteckt wird und in der Aufnahmebohrung der Rollenbefestigungseinheit 501 fixiert wird.

Das Rollenelement 104 weist eine erste Kontaktfläche 314 und die Rollenbefestigungseinheit 501 eine zweite Kontaktfläche 315 auf, wobei die erste Kontaktfläche 314 und die zweite Kontaktfläche 315 miteinander korrespondierende Verzahnungselemente aufweisen, um eine formschlüssige Kopplung bereitzustellen. Mittels der formschlüssigen Kopplung wird das Rollenelement 104 drehfest an der Rollenbefestigungseinheit 501 befestigt. Die Befestigungsschraube drückt das Rollenelement 104 somit axialen an die Rollenbefestigungseinheit 501 und die Verzahnungselemente sichern ein Verdrehen des Rollenelements 104 relativ zu der Rollenbefestigungseinheit 501. Die korrespondierenden Verzahnungselemente sind als halbkugelförmige Erhebungen 316 und entsprechend korrespondierenden halbkugelförmige Vertiefungen 317 ausgebildet. Bei Ineinandergreifen der Erhebungen 316 und Vertiefungen 317 entsteht eine formschlüssige Verbindung aufgrund der halbkugelförmigen Ausgestaltung wird zudem ein Zentrierungseffekt erzeugt. Somit kann in einfacher Art und Weise das Rollenelement 104 zügig gelöst und befestigt werden.

In der Rollenbefestigungseinheit 501 ist zur Befestigung der Drehwelle 302 ein elastisches Klemmelement 502 derart angeordnet, dass eine Klemmbefestigung zwischen der Rollenbefestigungseinheit 501 und dem Rollenelement 104 hergestellt wird.

**Fig. 6** zeigt eine schematische Darstellung einer Befestigung eines Rollenelements 104 an einer Rollenbefestigungseinheit 501 mittels Klemmen Elementen gemäß einer beispielhaften Ausführungsform. Insbesondere wird eine Draufsicht auf die zum Antriebsstrang 300 gerichtete Stirnfläche der Drehwelle 302 gezeigt. Auf der Drehwelle 302 sind umfänglich vier oder mehr halbkugelförmige Erhebungen 316 oder Vertiefungen 317 angeordnet. An den Mantelflächen der Drehwelle 302 sind Aufnahmen 601, z.B. Aufnahmenuten, ausgebildet. Das Klemmelement 502 kann insbesondere zylinderförmig ausgebildet sein bzw. eine zylinderförmige Säule ausbilden. Entsprechend kann die Aufnahme 601 eine Zylinderform mit einer kreisförmigen Grundfläche ausbilden. Alternativ kann das Klemmelement 502 eine eckige, insbesondere 4-eckige, Grundfläche aufweisen und die Aufnahme 601 korrespondierend ausgebildet werden. Die Drehwelle 302 wird in die Rollenbefestigungseinheit 501 gedrückt sodass sich die elastischen Klemmelemente 502 verformen und eine Klemmkraft erzeugen, die die Drehwelle 302 in der Rollenbefestigungseinheit 501 befestigen.

**Fig.** 7 zeigt eine schematische Darstellung einer Leistungsplatine 700 mit Batteriezellen 701, 702 gemäß einer beispielhaften Ausführungsform. Die Plattform 100 weist ferner eine Leistungsplatine 700 auf, welche in dem Grundkörper 101, insbesondere in dem Installationsbereich 105, angeordnet ist. Ferner weist die Plattform 100 Batteriezellen 701, 702 auf, welche mit der Leistungsplatine 700 derart gekoppelt sind, dass die Leistungsplatine 700 ein Laden der und einen Strombezug von den Batteriezellen701, 702 ermöglicht. Die Batteriezellen 701, 702 sind parallel geschaltet. Die Batteriezellen 701, 702 sind als Flachbatterie mit einem viereckigen Umfang und einer geringen Dicke ausgebildet.

Die Batteriezellen 701, 702 weisen einen ersten Pol, der mit einem ersten Kontaktpin 703 ausgebildet wird, und einen zweiten Pol auf, der mit einem zweiten Kontaktpin 704 ausgebildet wird. Der erste Kontaktpin 703 und der zweite Kontaktpin 704 ist mit entsprechenden Aufnahmebuchsen 705 der Leistungsplatine 700 gekoppelt ist. Der erste Kontaktpin 703 und der zweite Kontaktpin 704 weisen eine unterschiedliche Länge auf.

**Fig.** 8 zeigt eine schematische Darstellung einer Befestigung von Antennenmodulen in der Plattform 100 gemäß einer beispielhaften Ausführungsform. Das Antennenmodul 113 ist in der Aufnahmeöffnung 114 derart angeordnet, dass das Antennenmodul 113 bündig mit der Oberfläche 103 abschließt. Somit kann selbst bei Überfahren der Plattform 100 mit einem Kollisionsfahrzeug ein Schadensrisiko des Antennenmoduls 113 reduziert werden.

Das Antennenmodul 113 ist als Flachantenne ausgebildet, wobei das Antennenmodul 113 insbesondere zylinderförmig ausgebildet ist und in eine entsprechend runde Aufnahmebohrung 114 in der Plattform 100 integriert werden. Die Aufnahmeöffnung 114 stellt eine Durchgangsöffnung zwischen der Oberfläche 103 und der Bodenfläche 102 des Grundkörpers 101 da. Somit kann eine einfachere Demontage des Antennenmoduls 113 ermöglicht werden, indem beispielsweise von einer Seite der Aufnahmeöffnung 114 mit der Hand oder mit einem Werkzeug eingefahren wird und das Antennenmodul 113 auf der gegenüberliegenden Seite hinausgedrückt werden.

In der Aufnahmeöffnung 114 sind zwischen dem Grundkörper 101 und dem Antennenmodul 113 elastische Klemmelemente 502 derart vorgesehen, dass eine lösbare Klemmbefestigung des Antennenmoduls 113 in der Aufnahmeöffnung 114 bereitstellbar ist. Die elastischen Klemmelemente 502 können beispielsweise gummiartige Elemente darstellen. Die elastischen Klemmelemente 502 werden beispielsweise in einem Spalt zwischen dem Grundkörper 101 und dem Antennenmodul 113 angeordnet. Je nach Elastizität und Größe des Klemmelements 502 kann die gewünschte Klemmkraft eingestellt werden. Die Klemmkraft wird insbesondere derart konfiguriert, dass ein Lösen des Antennenmoduls 113 aufgrund seines Eigengewichts und aufgrund von definierten Stoßbewegungen in vertikale Richtung bzw. in Richtung z-Achse das Antennenmodul 113 nicht aus der Aufnahmeöffnung 114 gelöst wird.

**Fig. 9** zeigt eine schematische Darstellung einer Strahlungscharakteristik 900 eines Antennenmoduls 113 gemäß einer beispielhaften Ausführungsform. Das Antennenmodul 113 weist in der Umfangsfläche eine Aufnahme 901 (Aufnahmenut) zur Befestigung des Klemmelements 502 auf. Das Klemmelement 502 kann insbesondere zylinderförmig ausgebildet sein bzw. eine zylinderförmige Säule ausbilden. Entsprechend kann die Aufnahme 901 eine Zylinderform mit einer kreisförmigen Grundfläche ausbilden. Alternativ kann das Klemmelement 502 eine eckige, insbesondere 4-eckige, Grundfläche aufweisen und die Aufnahme 901 korrespondierend ausgebildet werden.

Das Antennenmodul 113 weist eine Strahlungscharakteristik 900 mit zumindest einer Hauptkeule auf und ist derart angeordnet, dass die Hauptkeule im Wesentlichen innerhalb einer Horizontalebene (seit der Bodenebene) liegt, wenn die Plattform 100 auf dem Boden 130 aufliegt. Typischerweise werden bei Antennen die Strahlungsrichtung in vertikale Richtung ausgelegt.

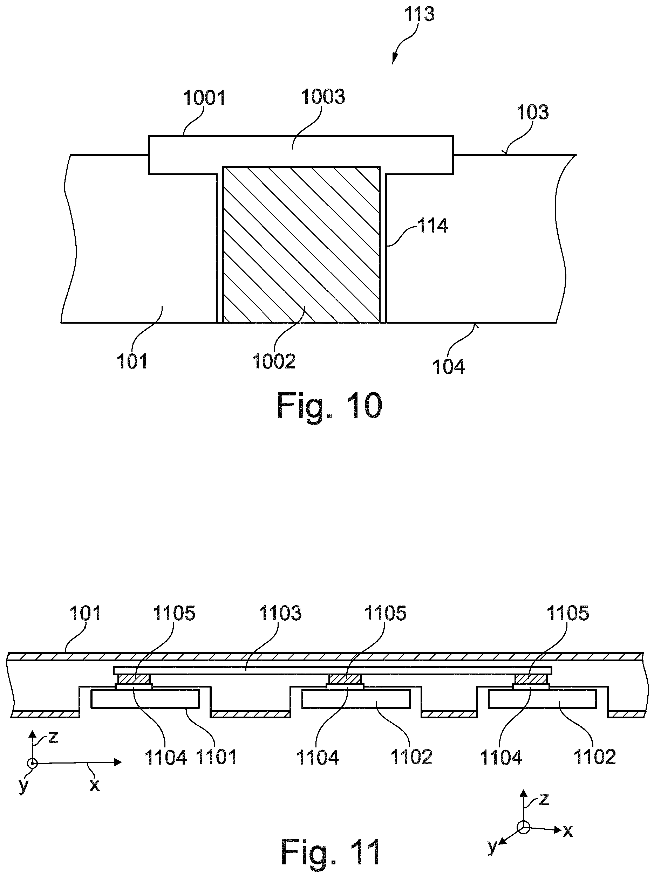

**Fig. 10** zeigt eine schematische Darstellung eines Antennenmoduls 113 gemäß einer beispielhaften Ausführungsform der vorliegenden Erfindung. Das Antennenmodul 113 weist ein Gehäuse 1001 und eine Antennenelektronik 1002 auf, die in dem Gehäuse 1001 befestigt ist. Zwischen einer Oberseite des Gehäuses 1001, die bündig mit der Oberfläche 103 des Grundkörpers 101 ist oder von der Oberfläche 103 in Richtung Umgebung hervorragt, und der Antennenelektronik 1002 liegt ein Abstandsvolumen 1003 vor. Die Oberseite des Gehäuses 1001 ist derart elastisch verformbar ausgebildet, dass eine elastische Verformung in das Abstandsvolumen 1003 bereitstellbar ist. Somit kann das Abstandsvolumen 1003 einen Puffer und ein Dämpfungselement darstellen, sodass die Gewichtskraft eines über das Antennenmodul 113 fahrenden Kollisionsfahrzeug gedämpft wird und somit ein Schaden an dem Antennenmodul 113 verhindert wird.

**Fig. 11** zeigt eine schematische Darstellung einer Verbindungsplatine 1103, welche in dem Grundkörper 101 installiert ist, gemäß einer beispielhaften Ausführungsform.

Die Plattform 100 weist ferner zumindest ein erstes Funktionsmodul 1101 und ein zweites elektronisches Funktionsmodul 1102 auf, welche in dem Grundkörper 101 angeordnet sind. Ferner weist die Plattform 100 eine Verbindungsplatine 1103 auf, die zwischen dem ersten und zweiten elektronischen Funktionsmodul 1101, 1102 und der Oberfläche 103 des Grundkörpers 101 angeordnet ist, wobei das erste und zweite elektronische Funktionsmodul 1101, 1102 jeweils an einer zur Oberfläche 103 des Grundkörpers 101 gerichteten Seite zumindest einen Kontaktstecker 1104 aufweist. Die Verbindungsplatine 1103 erstreckt sich entlang der Oberfläche 103 zwischen dem ersten und zweiten elektronischen Funktionsmodul 1101, 1102 erstreckt und weist entsprechende Kontaktstellen 1105 zur Aufnahme der Kontaktstecker 1104 der ersten und zweiten elektronischen Funktionsmodule 1101, 1102 auf, sodass die Funktionsmodule 1101, 1102 vertikal auf die Verbindungsplatine 1103 aufsteckbar sind.

Ein Funktionsmodul 1101, 1102 bzw. funktionale Elemente können beispielsweise aktive elektronische Komponenten beschreiben, die Signale und elektrische Leistung beziehen oder abgeben, wie beispielsweise die Antriebseinheiten 301, Batteriemodule oder Kommunikationseinheiten. Die Funktionsmodule 1101, 1102 sind beispielsweise durch eine Aufnahmeöffnung 114durch die Oberfläche 103 oder die Bodenfläche 102 der Plattform 100 in ihre gewünschte Position montierbar. Die Funktionsmodule 1101, 1102 sind insbesondere miteinander zum Signalaustausch und zum Austausch von elektrischer Leistung gekoppelt. Dies wird mit der vorliegenden beispielhaften Ausführungsform mittels der Verbindungsplatine 1103 durchgeführt.

Die Verbindungsplatine 1103 weist Kontaktstellen 1105 auf, die durch die Aufnahmeöffnung der Plattform 100 insbesondere in vertikaler Steckrichtung erreichbar sind. Die Funktionsmodule 1101, 1102 weisen entsprechende Kontaktstecker 1104 auf, die ebenfalls in vertikaler Richtung zugänglich sind. Mit anderen Worten weist die Verbindungsplatine 1103 zwei gegenüberliegende Hauptflächen auf, an deren die Kontaktstellen 1105 ausgebildet sind. Die Leiterbahnen der Verbindungsplatine 1103 sind derart ausgebildet, dass die Kontaktstellen 1105 zum Austausch elektrischer Leistung und elektrischer Signale verbunden sind. Im eingesteckten Zustand der Funktionsmodule 1101, 1102 an die Verbindungsplatine 1103 sind diese somit über die Verbindungsplatine 1103 elektronisch verbunden. Weitere freie Verbindungsdrähte sind zwischen den Funktionsmodulen 1101, 1102 nicht notwendig. So kann beispielsweise die Leistungsplatine 700 an einer Stelle und ein Kommunikationsmodul oder die Antriebseinheit 301 an einer anderen Stelle in der Plattform 100 an der Verbindungsplatine 1103 angeschlossen sein, sodass ohne eine Drahtverbindung aufgrund der Leiterbahnen in der Verbindungsplatine 1103 die Funktionsmodule 1101, 1102 miteinander verbunden sind. Somit können die Funktionsmodule 1101, 1102 in vertikaler Steckrichtung einfach an einer vorbestimmten Stelle an die Verbindungsplatine 1103 angesteckt werden entsprechend in einfacher Art und Weise ausgetauscht werden.

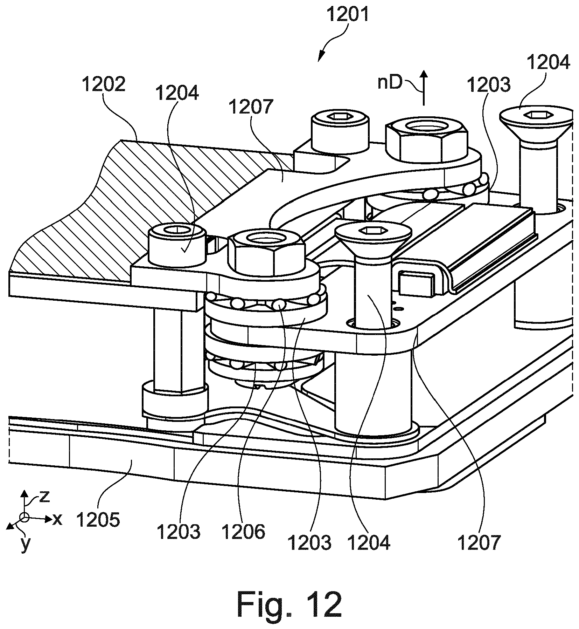

**Fig. 12** zeigt eine schematische Darstellung eines elektronischen Modul 1201 mit einer Dämpfungsmechanik gemäß einer beispielhaften Ausführungsform.

Die Plattform 100 weist ferner zumindest ein elektronisches Modul 1201 auf, welches in dem Grundkörper 101 angeordnet ist, wobei das elektronische Modul 1201 ein elektronisches Bauteil 1202, insbesondere mit einer Platine, aufweist. Das elektronische Modul 1201 weist ein flächiges viskoelastisches Dämpfungselement 1203, insbesondere ein zylinderartiges Dämpfungselement 1203, auf, an dem das elektronische Bauteil 1202 befestigt ist. Das elektronische Modul 1201 weist eine Trägerstruktur 1205 auf, an welchem das viskoelastische Dämpfungselement 1203 mittels einem Befestigungselement 1204, wie beispielsweise eine Befestigungsschraube, befestigt ist, sodass Vibrationen, welche von dem Grundkörper 101 auf das elektronische Bauteil 1202 wirken, mittels des viskoelastischem Dämpfungselement dämpfbar sind.

Das Dämpfungselement 1203 weist beispielsweise eine zylindrische Form auf, auf deren Grundfläche bzw. Oberfläche die Platine bzw. das elektronische Bauteil 1202 aufgelegt und befestigt werden kann. Die Grundfläche des Dämpfungselements 1203 ist dabei parallel zu der Bodenfläche 102 bzw. der Horizontalebene, wenn die Plattform 100 auf dem Boden 130 aufliegt. In z-Richtung bzw. in vertikaler Richtung kann sich das Dämpfungselement 1203 einfacher elastisch verformen als in Bodenebene, d. h. in y-Richtung oder x-Richtung, da das Dämpfungselement 1203 innerhalb der Bodenebene ein größeres Flächenträgheitsmoment aufweist.

Das viskoelastische Dämpfungselement 1203 ist innerhalb einer Dämpfungsebene, deren Normale nd parallel ist zu der Normalen einer Bodenebene ist, derart erstreckt, dass das Dämpfungselement 1203 gegenüber einer Verformung senkrecht zur Normalen der Bodenebene steifer ist als gegenüber einer Verformung parallel zur Normalen der Bodenebene, sodass Vertikalkräfte, die sich parallel zur Normalen der Bodenebene erstrecken, mittels des viskoelastischem Dämpfungselement 1203 stärker dämpfbar sind als Horizontalkräfte, die sich senkrecht zur Normalen der Bodenebene erstrecken.

Entsprechend können beispielsweise Sensoren als elektronische Bauteile, die Stoßbewegungen der Plattform 100 korrekt gemessen, da kaum Dämpfung durch das Dämpfungselement 1203 verursacht wird. Stoßbewegungen in vertikaler Richtung, die messtechnisch störend sind, werden hingegen durch das Dämpfungselement 1203 gedämpft und das elektronische Bauteil 1202 somit schonender befestigt.

Um die Seitwärtsbewegung bzw. die Versteifung in Bodenebene zu erhöhen, werden flächige Verbindungsplättchen 1207 vorgesehen, die zwischen Befestigungselemente 1204, wie beispielsweise Befestigungsschrauben, horizontal, d. h. in x-y-Ebene verlaufen. Die Dämpfungselemente 1203 können dabei Erhebungen 1206 vertikal in Z-Richtung aufweisen, die teilweise die Verbindungsplättchen 1207 umgeben. Die Erhebungen 1206 bilden somit einen Sitz für die Verbindungsplättchen 1207.

Das viskoelastische Dämpfungselement 1203 ist mittels dem Befestigungselement 1204 bzw. der Befestigungsschraube an der Trägerstruktur 1205 befestigt, wobei die Befestigungsschraube 1204 eine Einschraubrichtung parallel zur Normalen der Bodenebene bzw. der Normalen nD der Dämpfungsebene aufweist. Das Dämpfungselement 1203 ist beispielsweise zylinderförmige und weist entlang seiner Mittelachse eine Durchgangsöffnung auf, durch welche entsprechend das Befestigungselement 1204 eingebracht werden kann.

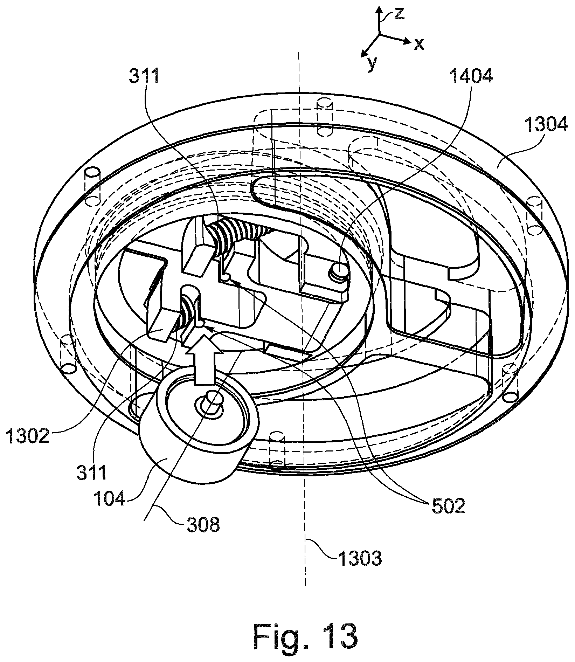

**Fig. 13** zeigt eine schematische Darstellung einer Befestigung eines Rollenelements 104 an den Grundkörper 101 der Platine gemäß einer beispielhaften Ausführungsform.

Das Rollenelement 104 weist eine Rollenachse 1301 auf, wobei das Rollenelement 104 um die Rollenachse 1301 drehbar ist. Der Grundkörper 101 weist an der Bodenfläche 102 eine Rollenaufnahme 1302 zur Aufnahme der Rollenachse 1301 auf, wobei in der Rollenaufnahme 1302 ein elastisches Klemmelement 502 derart angeordnet ist, dass eine Klemmbefestigung zwischen der Rollenaufnahme 1302 und dem Rollenelement 104 bereitstellbar ist. Die Elastizität und/oder die Größe der Klemmelemente 502 ist derart konfiguriert, dass erst bei einer Entkopplungskraft, die höher als die Gewichtskraft des Rollenelements 104 ist, ein Lösen des Rollenelements 104 von der Rollenaufnahme 1302 ermöglicht ist.

Die Rollenaufnahme 1302 ist beispielsweise als Aufnahmegabel ausgebildet, sodass die Rollenachse 1301 des Rollenelements 104 von dem Klemmelement 502 in die Aufnahme 1302 geklemmt wird. Das Rollenelement 104 ist dann derart ausgebildet, dass sich das Rollenelement 104 um die eingeklemmte Rollenachse 1301 dreht. Die Rollenaufnahme 1302 kann ferner um eine Schwenkachse 1304, die senkrecht zur Drehachse 1303 und innerhalb einer x-y-Ebene verläuft, schwenkbar an die Trägerstruktur 1304 befestigt werden, sodass die Rollenaufnahme 1302 zusammen mit dem Rollenelement 104 relativ zur Plattform 100 ein- und ausschwenken kann. Die Schwenkfeder 311 ist zwischen der Rollenaufnahme 1302 und der Trägerstruktur 1304 derart angeordnet, dass eine Schwenkbewegung der Rollenaufnahme 1302 relativ zur Trägerstruktur 1304 definiert dämpfbar ist. Die Schwenkfedern 311 weisen z.B. eine degressive Federkennlinie auf, die mit Zunahme der Einfederung der Rollenaufnahme 1302 zur Trägerstruktur 1304 die Federkraft verringert.

Die Rollenaufnahme 1302 ist an dem Grundkörper 101 bzw. an einer entsprechenden Trägerstruktur 1304 drehbar um eine Drehachse 1303 angeordnet, wobei das Rollenelement 104 exzentrisch und beabstandet von der Drehachse 1303 an der Rollenaufnahme 1302 befestigt ist. Somit kann bei Änderung der Fahrtrichtung der Plattform 100 das Rollenelement 104 zügig und ohne Widerstand in die neue Fahrtrichtung entlang rollen.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden ist, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste:

| | | | |
|---|---|---|---|
| 100 | Plattform | 309 | Koppelstelle |
| 101 | Grundkörper | 310 | elektrischer Stecker |
| 102 | Bodenfläche | 311 | Schwenkfeder |
| 103 | Oberfläche | 312 | Planetenrad |
| 104 | Rollenelement | 313 | Befestigungsschraube |
| 105 | Installationsbereich | 314 | erste Kontaktfläche |
| 106 | Befestigungsbereich | 315 | zweite Kontaktfläche |
| 107 | Installationsdicke | 316 | halbkugelförmige Erhebungen |
| 108 | Befestigungsdicke | 317 | halbkugelförmige Vertiefungen |
| 109 | Übergangsbereich | | |
| 110 | Außenkantenbereich | 401 | Aufnahmeöffnung |
| 111 | Kuppelbereich | | |
| 112 | elektrische Kontaktfläche | 501 | Rollenbefestigungseinheit |
| 113 | Antennenmodul | 502 | elastisches Klemmelement |
| 114 | Aufnahmeöffnung | | |
| 130 | Boden | 601 | Aufnahme für Klemmelement |
| 201 | Befestigungsvorrichtung | 700 | Leistungsplatine |
| | | 701 | erste Batteriezelle |
| 300 | Antriebsstrang | 702 | zweite Batteriezelle |
| 301 | Antriebseinheit | 703 | erster Kontaktpin |
| 302 | Drehwelle | 704 | zweiter Kontaktpin |
| 303 | Antriebswelle | 705 | Aufnahmebuchse |
| 304 | Getriebeeinheit | | |
| 305 | weitere Antriebseinheit | 900 | Strahlungscharakteristik |
| 306 | Drehpin | 901 | Aufnahme für Klemmelement |
| 307 | Schwenkachse | | |
| 308 | Drehachse | 1001 | Gehäuse |
| | | 1002 | Antennenelektronik |
| | | 1003 | Abstandsvolumen |
| 1101 | erstes Funktionsmodul | | |
| 1102 | zweites Funktionsmodul | | |
| 1103 | Verbindungsplatine | | |
| 1104 | Kontaktstecker | | |
| 1105 | Kontaktstelle | | |
| 1201 | elektronisches Modul | | |
| 1202 | elektronisches Bauteil | | |
| 1203 | Dämpfungselement | | |
| 1204 | Befestigungselement | | |
| 1205 | Trägerstruktur | | |
| 1206 | Erhebung | | |
| 1207 | Verbindungsplättchen | | |
| 1301 | Rollenachse | | |
| 1302 | Rollenaufnahme | | |
| 1303 | Drehachse Rollenaufnahme | | |
| 1304 | Schwenkachse Rollenaufnahme | | |
| α | Winkel Übergangsbereich | | |
| β | Winkel Außenkantenbereich | | |
| γ | Winkel Schwenkfeder | | |
| a | Axialrichtung | | |
| nD | Normale Dämpfungsebene | | |
| nS | Normale Schwenkebene | | |

## Patentansprüche

1. Plattform (100) für einen Dummy zum Simulieren von Verkehrssituationen, die Plattform (100) aufweisend
einen Grundkörper (101), welcher eine Bodenfläche (102) und eine gegenüber der Bodenfläche (102) ausgebildete Oberfläche (103) aufweist,
zumindest ein Rollenelement (104), welches an der Bodenfläche (102) angeordnet ist,
wobei das Rollenelement (104) derart ausgebildet ist, dass der Grundkörper (101) mittels des Rollenelements (104) entlang eines Bodens verfahrbar ist, wobei das Rollenelement (104) eine Rollenachse (1301) aufweist und um die Rollenachse (1301) drehbar ist,
wobei der Grundkörper (101) einen Befestigungsbereich (106) und einen Installationsbereich (105) aufweist,
wobei auf der Befestigungsoberfläche des Befestigungsbereichs (106) eine Befestigungsvorrichtung (201) zum Befestigen des Dummys ausgebildet ist, wobei in dem Installationsbereich (105) funktionale Elemente installierbar sind, wobei der Grundkörper (101) derart dünn ausgebildet ist, dass ein Kollisionsfahrzeug schadlos über den Grundkörper (101) fahren kann,
**dadurch gekennzeichnet, dass**
- der Grundkörper (101) an der Bodenfläche (102) eine Rollenaufnahme (1302) zur Aufnahme der Rollenachse (1301) aufweist, und
- in der Rollenaufnahme (1302) ein elastisches Klemmelement (502) derart angeordnet ist, dass eine Klemmbefestigung zwischen der Rollenaufnahme (1302) und dem Rollenelement (104) bereitstellbar ist.

2. Plattform (100) gemäß Anspruch 1, wobei die Plattform (100) zumindest eines der folgenden Merkmale aufweist:
wobei der Grundkörper (101) derart stufenförmig ausgebildet ist,
wobei insbesondere eine Befestigungsdicke (108) zwischen der Bodenfläche (102) und der Oberfläche (103) in dem Befestigungsbereich (106), insbesondere 30 mm, 25mm, 20mm, 15mm, 10 mm, oder 5mm, kleiner ist als eine Installationsbereich (105) zwischen der Bodenfläche (102) und der Oberfläche (103) in dem Installationsbereich (105),
wobei die Befestigungsdicke (108) weniger als 40mm, insbesondere weniger als 35mm, weniger als 30mm, weniger als 25mm, weniger als 20mm, weniger als 15mm, weniger als 10 mm, beträgt und/oder,
wobei die Installationsdicke (107) weniger als 60mm, weniger als 55 mm,
insbesondere weniger als 50mm, weniger als 45mm, weniger als 40mm, weniger als 35mm, weniger als 30mm, weniger als 25mm, weniger als 20mm, weniger als 15mm, weniger als 10 mm, beträgt und/oder,
wobei die Maximaldicke der Plattform zwischen einer Bodenauflage des Rollenelements (104) auf dem Boden (130) und der Oberfläche (103),
insbesondere des Installationsbereichs, weniger als 60mm, weniger als 55 mm, insbesondere weniger als 50 mm, 45 mm, 40 mm oder 35 mm ist,
wobei der Befestigungsbereich (106) mehr als 30 %, insbesondere mehr als 40%, 50%, oder 70%, der Oberfläche (103) des Grundkörpers (102) aufweist,
wobei zwischen dem Installationsbereich (105) und dem Befestigungsbereich (106) ein Übergangsbereich (109) ausgebildet ist,
wobei die Oberfläche (103) in dem Übergangsbereich (109) einen Winkel (α) zur Oberfläche (103) in dem Installationsbereich (105) und/oder dem Befestigungsbereich (106) zwischen 5° und 45°, insbesondere zwischen 5° und 15°, aufweist,
wobei der Grundkörper (101) Außenkantenbereiche (110) aufweist, die den Befestigungsbereich (106) und/oder den Installationsbereich (105) umgeben, wobei die Außenkantenbereiche (110) keilförmig ausgebildet sind,
wobei zumindest ein keilförmiger Außenkantenbereich (110) einen Öffnungswinkel von unter 30°, insbesondere unter 25°, aufweist,
wobei die Außenkantenbereiche (110) eine strahlungsabsorbierende, insbesondere radarwellenabsorbierende, Oberfläche (103) aufweist,
wobei die Oberfläche der Außenkantenbereiche (110) eine graue Beschichtung, insbesondere RAL 7005 oder RAL 7035 aufweist,
wobei die Oberfläche (103) im Bereich des Rollenelements (104) ein kuppelförmigen Abdeckelement (111) aufweist.

3. Plattform (100) gemäß Anspruch 1 oder 2, ferner aufweisend
einen Antriebsstrang (300), der eine Antriebseinheit (301) aufweist,
wobei das Rollenelement (104) mit der Antriebseinheit (301) zum Übertragen eines Antriebsmoments gekoppelt ist,
wobei der Antriebsstrang (300) und das Rollenelement (104) entlang einer Axialrichtung hintereinander derart gekoppelt sind, dass der Antriebsstrang (300) zusammen mit dem Rollenelement (104) zumindest teilweise in einer Aufnahmeöffnung (401) in der Bodenfläche (102) des Grundkörpers (102) vorliegt,
wobei der Antriebsstrang mit dem Rollenelement (104) in die Aufnahmeöffnung (401) hinein- und herausschwenkbar angeordnet ist.

4. Plattform (100) gemäß Anspruch 3, wobei die Plattform (100) zumindest eines der folgenden Merkmale aufweist:
wobei die Antriebseinheit (301) eine Antriebswelle (303) aufweist und das Rollenelement (104) eine Drehwelle (302) aufweist,
wobei die Antriebseinheit (301) und das Rollenelement (104) derart angeordnet sind, dass die Antriebswelle (303) und die Drehwelle (302) parallel zur Axialrichtung verlaufen,
wobei die Antriebseinheit (301) und das Rollenelement (104) derart angeordnet sind, dass die Antriebswelle (303) und die Drehwelle (302) koaxial verlaufen,
wobei der Antriebsstrang eine Getriebeeinheit (304), insbesondere ein Planetengetriebe aufweist, zwischen der Antriebswelle (303) und der Drehwelle (302) derart angeordnet ist, dass ein Antriebsmoment der Antriebswelle (303) auf die Drehwelle (302) übersetzt übertragbar ist,
wobei der Antriebsstrang eine weitere Antriebseinheit (305) aufweist,
wobei die weitere Antriebseinheit (305) derart an die Getriebeeinheit (304) gekoppelt ist, dass ein weiteres Antriebsmoment von der Antriebswelle (303) auf die Drehwelle (302) übersetzt übertragbar ist,
wobei die Getriebeeinheit (304) ein Planetengetriebe mit zumindest einem ersten und einem zweiten Planetenrad (312) aufweist, wobei die Antriebseinheit (301) das erste Planetenrad (312) und die weitere Antriebseinheit (305) an das zweite Planetenrad (312) gekoppelt ist,
wobei der Antriebsstrang (300), insbesondere an einem axialen Ende, einen Drehpin (305), welcher eine Schwenkachse (307) ausbildet, aufweist,
wobei der Drehpin (305) mit dem Grundkörper (101) gekoppelt ist,
wobei die Schwenkachse (307) quer zur Axialrichtung des Antriebsstrangs (300) verläuft,
wobei der Antriebsstrang (300) an dem axialen Ende eine elektrische Koppelstelle (309) aufweist zum Ankoppeln eines elektrischen Steckers,
wobei der elektrische Stecker (310) mit der Koppelstelle (309) wasserdicht verbunden ist, insbesondere mittels einer Klebeverbindung und/oder einer Schrumpfschlauchverbindung.

5. Plattform (100) gemäß Anspruch 3 oder 4, ferner aufweisend
eine Schwenkfeder (311), welche zwischen dem Antriebsstrang (300) und dem Grundkörper (101) derart angeordnet ist, dass eine Schwenkbewegung des Antriebsstrangs (300) relativ zum Grundkörper (101) definiert dämpfbar ist, wobei die Schwenkfeder (311) insbesondere eine degressive Federkennlinie aufweist, die mit Zunahme der Einfederung des Antriebsstrangs (300) in die Aufnahmeöffnung (401) die Federkraft verringert,
wobei insbesondere die Schwenkfeder (311), insbesondere als Schraubenfeder, eine Federkraft entlang einer Federkraftrichtung erzeugt,
wobei die Schwenkfeder (311) derart zwischen dem Grundkörper (101) und dem Antriebsstrang (300) angeordnet ist, dass die Federkraft einen Winkel (γ) zwischen 20° und 70, insbesondere zwischen 40° und 50°, aufweist.

6. Plattform (100) gemäß einem der Ansprüche 3 bis 5, wobei die Plattform (100) zumindest eines der folgenden Merkmale aufweist:
wobei der Antriebsstrang eine Rollenbefestigungseinheit (501) aufweist, an welcher das Rollenelement (104) austauschbar befestigbar ist,
wobei die Rollenbefestigungseinheit (501) um die Axialrichtung drehbar ist,
wobei das Rollenelement (104) mittels einer, insbesondere mittels ausschließlich einer, Befestigungsschraube (313) an der Rollenbefestigungseinheit (501) lösbar befestigbar ist,
wobei die Einschraubrichtung der Befestigungsschraube (313) insbesondere parallel zur Axialrichtung ausgebildet ist,
wobei das Rollenelement (104) eine erste Kontaktfläche (314) und die Rollenbefestigungseinheit (501) eine zweite Kontaktfläche (315) aufweisen,
wobei die erste Kontaktfläche (314) und die zweite Kontaktfläche (315) miteinander korrespondierende Verzahnungselemente aufweisen, um eine formschlüssige Kopplung bereitzustellen,
wobei die korrespondierende Verzahnungselemente derart ausgebildet sind, dass eine Hirth-Verzahnung bereitstellbar ist oder wobei die korrespondierende Verzahnungselemente als halbkugelförmige Erhebungen (316) und entsprechend korrespondierende halbkugelförmige Vertiefungen (317) ausgebildet sind.

7. Plattform (100) gemäß einem der Ansprüche 1 bis 6, ferner aufweisend
eine Leistungsplatine (700), welche in dem Grundkörper (101), insbesondere in dem Installationsbereich (105), angeordnet ist, und
zumindest eine Batteriezelle (701), welche mit der Leistungsplatine (700) derart gekoppelt ist, dass die Leistungsplatine (700) ein Laden der und einen Strombezug von der Batteriezelle (701) ermöglicht.

8. Plattform (100) gemäß Anspruch 7, wobei die Plattform (100) zumindest eines der folgenden Merkmale aufweist:
wobei die Plattform (100) ferner zumindest zwei Batteriezellen (701, 702) aufweist,
wobei die Batteriezellen (701, 702) parallel geschaltet sind,
wobei die Einzelspannungen der Batteriezellen (701, 702) hochmodulierbar sind,
wobei die Plattform (100) mehr als 10, insbesondere mehr als 16 Batteriezellen (701, 702) aufweist,
wobei zumindest eine der Batteriezellen (701, 702) als Lithiumtitanat-Batterie mit einer Nennspannung zwischen 1,2 V und 3 V, insbesondere 2,4 V, ausgebildet ist,
wobei zumindest eine der Batteriezellen (701, 702) als Flachbatterie mit einem viereckigen Umfang und einer Dicke von weniger als 22mm, insbesondere weniger als 14 mm ausgebildet ist,
wobei zumindest eine der Batteriezellen (701, 702) einen ersten Pol, der mit einem ersten Kontaktpin (703) ausgebildet wird, und einen zweiten Pol, der mit einem zweiten Kontaktpin (704) ausgebildet ist,
wobei der erste Kontaktpin (703) und der zweite Kontaktpin (704) mit entsprechenden Aufnahmebuchsen (705) der Leistungsplatine (700) gekoppelt ist,
wobei der erste Kontaktpin (703) und der zweite Kontaktpin (704) eine unterschiedliche Länge aufweisen,
wobei der Grundkörper (101) zumindest zwei elektrischen Kontaktflächen (112) aufweist, die von außerhalb der Plattform (100) frei zugänglich sind,
wobei die Kontaktflächen (112) mit der Leistungsplatine (700) stromleitend verbunden sind,
wobei die zwei elektrischen Kontaktflächen (112) insbesondere derart ausgebildet sind, dass Schleifkontakte mit Kontaktstellen einer stationären Ladestation bereitstellbar sind.

9. Plattform (100) gemäß einem der Ansprüche 1 bis 8, ferner aufweisend
zumindest ein Antennenmodul (113), insbesondere ein WLAN oder ein GPS Antennenmodul (113),
wobei der Grundkörper (101) an der Oberfläche (103) eine Aufnahmeöffnung (114) aufweist, in welcher das Antennenmodul (113) angeordnet ist, wobei die Plattform (100) zumindest eines der folgenden Merkmale aufweist:
wobei das Antennenmodul (113) in der Aufnahmeöffnung (114) derart angeordnet ist, dass das Antennenmodul (113) bündig mit der Oberfläche (103) abschließt, oder
wobei eine Oberfläche des Antennenmoduls (113) 6 mm, insbesondere 3 mm oder 1 mm von der Oberfläche (103) des Grundkörpers (101) ins Innere der Aufnahmeöffnung (114) versetzt ist,
wobei das Antennenmodul (113) als Flachantenne ausgebildet ist,
wobei das Antennenmodul (113) insbesondere zylinderförmig mit einem Durchmesser von 90mm bis 50mm, insbesondere von 70 mm aufweist,
wobei das Antennenmodul (113) eine Strahlungscharakteristik (900) mit zumindest einer Hauptkeule aufweist, die im Wesentlichen innerhalb einer Horizontalebene liegt, wenn die Plattform (100) auf dem Boden (130) aufliegt,
wobei die Aufnahmeöffnung (114) eine Durchgangsöffnung zwischen der Oberfläche (103) und der Bodenfläche (102) des Grundkörpers (102) darstellt, wobei das Antennenmodul (113) ein Gehäuse (1001) und eine Antennenelektronik (1002) aufweist, die in dem Gehäuse (1001) befestigt ist,
wobei zwischen einer Oberseite des Gehäuses (1001), die bündig mit der Oberfläche (103) des Grundkörper (101) ist oder von der Oberfläche (103) in Richtung Umgebung hervorragt, und der Antennenelektronik (1002) ein Abstandsvolumen (1003) vorliegt,
wobei die Oberseite des Gehäuses (1001) derart elastisch verformbar ausgebildet ist, dass eine elastische Verformung in das Abstandsvolumen (1003) bereitstellbar ist,
wobei in der Aufnahmeöffnung (114) zwischen dem Grundkörper (101) und dem Antennenmodul (113) elastische Klemmelemente (502) derart vorgesehen sind,
dass eine lösbare Klemmbefestigung des Antennenmoduls (113) in der Aufnahmeöffnung (114) bereitstellbar ist,
wobei das Antennenmodul (113) in der Umfangsfläche eine Aufnahme (901) zur Befestigung des Klemmelements (502) aufweist,
wobei das Antennenmodul (113) im Bereich der Oberfläche (103) des Grundkörpers (102) eine Signalkoppelstelle derart aufweist, dass von der Signalkoppelstelle ein Antennensignal kontaktlos auf eine weitere Signalkoppelstelle des Dummys übertragbar ist.

10. Plattform (100) gemäß einem der Ansprüche 1 bis 9,
wobei die Elastizität der Klemmelemente (502) derart konfiguriert ist, dass erst bei einer Entkopplungskraft, die höher als die Gewichtskraft des Rollenelements (104) ist, ein Lösen des Rollenelements (104) von der Rollenaufnahme (1302) ermöglicht ist.

11. Plattform (100) gemäß einem der Ansprüche 1 bis 10,
wobei die Rollenaufnahme (1302) an dem Grundkörper (101) drehbar um eine Drehachse (308) angeordnet ist,
wobei das Rollenelement (104) exzentrisch und beabstandet von der Drehachse (308) an der Rollenaufnahme (1302) befestigt ist.

12. Plattform (100) gemäß einem der Ansprüche 1 bis 11, ferner aufweisend
zumindest ein elektronisches Modul (1201), welches in dem Grundkörper (101) angeordnet ist,
wobei das elektronische Modul (1201) ein elektronisches Bauteil (1202), insbesondere mit einer Platine, aufweist,
wobei das elektronische Modul (1201) ein flächiges viskoelastisches Dämpfungselement (1203), insbesondere ein zylinderartiges Dämpfungselement (1203), aufweist, an dem das elektronische Bauteil (1202) befestigt ist,
wobei das elektronische Modul (1201) eine Trägerstruktur (1105) aufweist, an welchem das viskoelastische Dämpfungselement (1203) befestigt ist, sodass Vibrationen, welche von dem Grundkörper (101) auf das elektronische Bauteil (1202) wirken, mittels des viskoelastischem Dämpfungselement (1203) dämpfbar sind.

13. Plattform (100) gemäß Anspruch 12, wobei die Plattform (100) zumindest eines der folgenden Merkmale aufweist:
wobei das viskoelastische Dämpfungselement (1203) sich innerhalb einer Dämpfungsebene, deren Normale parallel ist zu der Normalen einer Bodenebene ist, derart erstreckt, dass das Dämpfungselement (1203) gegenüber einer Verformung senkrecht zur Normalen der Bodenebene steifer ist als gegenüber einer Verformung parallel zur Normalen der Bodenebene, sodass Vertikalkräfte,
die sich parallel zur Normalen der Bodenebene erstrecken, mittels des viskoelastischem Dämpfungselement (1203) stärker dämpfbar sind als Horizontalkräfte, die sich senkrecht zur Normalen der Bodenebene erstrecken,
wobei das viskoelastische Dämpfungselement (1203) mittels einer Befestigungsschraube (313) an der Trägerstruktur (1105) befestigt ist,
wobei die Befestigungsschraube (313) insbesondere eine Einschraubrichtung parallel zur Normalen der Bodenebene aufweist,
wobei die Oberfläche (103) zumindest bereichsweise reflektierend, insbesondere für Wärmestrahlung, ausgebildet ist,
wobei die reflektierenden Bereiche der Oberfläche (103) insbesondere einen Mittenrauwert Ra zwischen Ra ≥ 0.1 µm bis Ra ≥ 12.5 µm aufweisen,
wobei die reflektierende Oberfläche einen Reflexionsgrad von mehr als 80%, insbesondere mehr als 90% oder mehr als 95% aufweist.

14. Plattform (100) gemäß einem der Ansprüche 1 bis 13. ferner aufweisend
ein Reflexionselement zur Reflexion von Strahlung, insbesondere Wärmestrahlung,
wobei das Reflexionselement entlang der Oberfläche (103) des Grundkörpers (101) mit einem Isolierabstand beabstandet verläuft,
wobei insbesondere der Isolierabstand mit Luft oder mit einem Dämmmaterial zur Wärmedämmung gefüllt ist.

15. Plattform (100) gemäß einem der Ansprüche 1 bis 14, ferner aufweisend
zumindest ein erstes Funktionsmodul (1101) und ein zweites elektronisches Funktionsmodul (1102), welche in dem Grundkörper (101) angeordnet sind,
eine Verbindungsplatine (1103), die zwischen dem ersten und zweiten elektronischen Funktionsmodul (1101, 1102) und der Oberfläche (103) des Grundkörpers (102) angeordnet ist,
wobei das erste und zweite elektronische Funktionsmodul (1101, 1102) jeweils an einer zur Oberfläche (103) des Grundkörpers (102) gerichteten Seite zumindest einen Kontaktstecker (1104) aufweist,
wobei die Verbindungsplatine (1103) sich entlang der Oberfläche (103) zwischen dem ersten und zweiten elektronischen Funktionsmodul (1101, 1102) erstreckt und entsprechende Kontaktstellen (1105) zur Aufnahme der Kontaktstecker (1104) der ersten und zweiten elektronischen Funktionsmodule (1101, 1102) aufweist, sodass die Funktionsmodule (1101, 1102) vertikal auf die Verbindungsplatine (1103) aufsteckbar sind.

## Claims

1. A platform (100) for a dummy for simulating traffic situations, the platform (100) comprising
a base body (101), which comprises a bottom surface (102) and a surface (103) formed opposite the bottom surface (102),
at least one roller element (104), which is arranged on the bottom surface (102),
wherein the roller element (104) is formed such that the base body (101) is movable along a floor by means of the roller element (104),
wherein the roller element (104) comprises a roller axle (1301) and is rotatable around the roller axle (1301),
wherein the base body (101) comprises a fastening region (106) and an installation region (105),
wherein a fastening device (201) for fastening the dummy is formed on the fastening surface of the fastening region (106),
wherein functional elements can be installed in the installation region (105), wherein the base body (101) is formed so thin that a collision vehicle can drive over the base body (101) without damage,
**characterized in that**
- the base body (101) comprises a roller receptacle (1302) on the bottom surface (102) for receiving the roller axle (1301), and
- an elastic clamping element (502) is arranged in the roller receptacle (1302) such that a clamping fastening between the roller receptacle (1302) and the roller element (104) can be provided.

2. The platform (100) according to claim 1, wherein the platform (100) comprises at least one of the following features:
wherein the base body (101) is formed in a stepped manner,
wherein in particular a fastening thickness (108) between the bottom surface (102) and the surface (103) in the fastening region (106), in particular 30 mm, 25 mm, 20 mm, 15 mm, 10 mm, or 5 mm, is smaller than an installation region (105) between the bottom surface (102) and the surface (103) in the installation region (105),
wherein the fastening thickness (108) is less than 40 mm, in particular less than 35 mm, less than 30 mm, less than 25 mm, less than 20 mm, less than 15 mm, less than 10 mm, and/or
wherein the installation thickness (107) is less than 60 mm, less than 55 mm, in particular less than 50 mm, less than 45 mm, less than 40 mm, less than 35 mm,
less than 30 mm, less than 25 mm, less than 20 mm, less than 15 mm, less than 10 mm, and/or
wherein the maximum thickness of the platform between a floor support of the roller element (104) on the floor (130) and the surface (103), in particular of the installation region, is less than 60 mm, less than 55 mm, in particular less than 50 mm, 45 mm, 40 mm or 35 mm,
wherein the fastening region (106) comprises more than 30%, in particular more than 40%, 50%, or 70%, of the surface (103) of the base body (102),
wherein a transition region (109) is formed between the installation region (105) and the fastening region (106),
wherein the surface (103) in the transition region (109) comprises an angle (α) to the surface (103) in the installation region (105) and/or the fastening region (106) of between 5° and 45°, in particular between 5° and 15°,
wherein the base body (101) comprises outer edge regions (110), which surround the fastening region (106) and/or the installation region (105),
wherein the outer edge regions (110) are formed in a wedge-shaped manner,
wherein at least one wedge-shaped outer edge region (110) comprises an opening angle of less than 30°, in particular less than 25°,
wherein the outer edge regions (110) comprise a radiation-absorbing, in particular radar-wave-absorbing, surface (103),
wherein the surface of the outer edge regions (110) comprises a gray coating, in particular RAL 7005 or RAL 7035,
wherein the surface (103) comprises a dome-shaped cover element (111) in the region of the roller element (104).

3. The platform (100) according to claim 1 or 2, further comprising
a drive train (300), which comprises a drive unit (301),
wherein the roller element (104) is coupled to the drive unit (301) for transmitting a drive torque,
wherein the drive train (300) and the roller element (104) are coupled one behind the other along an axial direction such that the drive train (300) together with the roller element (104) is at least partially present in a receiving opening (401) in the bottom surface (102) of the base body (102),
wherein the drive train is arranged with the roller element (104) pivotable into and out of the receiving opening (401).

4. The platform (100) according to claim 3, wherein the platform (100) comprises at least one of the following features:
wherein the drive unit (301) comprises a drive shaft (303) and the roller element (104) comprises a rotary shaft (302),
wherein the drive unit (301) and the roller element (104) are arranged such that the drive shaft (303) and the rotary shaft (302) run parallel to the axial direction,
wherein the drive unit (301) and the roller element (104) are arranged such that the drive shaft (303) and the rotary shaft (302) run coaxially,
wherein the drive train comprises a gear unit (304), in particular a planetary gear, is arranged between the drive shaft (303) and the rotary shaft (302) such that a drive torque of the drive shaft (303) can be transmitted to the rotary shaft (302) in a translated manner,
wherein the drive train comprises a further drive unit (305),
wherein the further drive unit (305) is coupled to the gear unit (304) such that a further drive torque can be transmitted from the drive shaft (303) to the rotary shaft (302) in a translated manner,
wherein the gear unit (304) comprises a planetary gear with at least a first and a second planetary wheel (312), wherein the drive unit (301) is coupled to the first planetary wheel (312) and the further drive unit (305) is coupled to the second planetary wheel (312),
wherein the drive train (300) comprises, in particular at an axial end, a rotary pin (305), which forms a pivot axis (307),
wherein the rotary pin (305) is coupled to the base body (101),
wherein the pivot axis (307) runs transversely to the axial direction of the drive train (300),
wherein the drive train (300) comprises an electrical coupling point (309) at the axial end for coupling an electrical plug,
wherein the electrical plug (310) is connected to the coupling point (309) in a watertight manner, in particular by means of an adhesive connection and/or a shrink hose connection.

5. The platform (100) according to claim 3 or 4, further comprising
a pivot spring (311), which is arranged between the drive train (300) and the base body (101) such that a pivot movement of the drive train (300) relative to the base body (101) can be damped in a defined manner,
wherein the pivot spring (311) comprises in particular a degressive spring characteristic curve, which reduces the spring force with an increase in the springing of the drive train (300) into the receiving opening (401),
wherein in particular the pivot spring (311), in particular as a helical spring, generates a spring force along a spring force direction,
wherein the pivot spring (311) is arranged between the base body (101) and the drive train (300) such that the spring force comprises an angle (γ) of between 20° and 70°, in particular between 40° and 50°.

6. The platform (100) according to any one of the claims 3 to 5, wherein the platform (100) comprises at least one of the following features:
wherein the drive train comprises a roller fastening unit (501), to which the roller element (104) is exchangeably fastenable,
wherein the roller fastening unit (501) is rotatable about the axial direction,
wherein the roller element (104) is releasably fastenable to the roller fastening unit (501) by means of a fastening screw (313), in particular by means of only one fastening screw (313),
wherein the screw-in direction of the fastening screw (313) is formed in particular parallel to the axial direction,
wherein the roller element (104) comprises a first contact surface (314) and the roller fastening unit (501) comprises a second contact surface (315),
wherein the first contact surface (314) and the second contact surface (315) comprise toothing elements corresponding to one another in order to provide a form-fitting coupling,
wherein the corresponding toothing elements are formed such that a Hirth toothing can be provided or wherein the corresponding toothing elements are formed as hemispherical elevations (316) and respectively corresponding hemispherical indentations (317).

7. The platform (100) according to any one of the claims 1 to 6, further comprising
a power board (700), which is arranged in the base body (101), in particular in the installation region (105), and
at least one battery cell (701), which is coupled to the power board (700) such that the power board (700) enables a charging of and a drawing of current from the battery cell (701).

8. The platform (100) according to claim 7, wherein the platform (100) comprises at least one of the following features:
wherein the platform (100) further comprises at least two battery cells (701, 702),
wherein the battery cells (701, 702) are connected in parallel,
wherein the individual voltages of the battery cells (701, 702) can be highly modulated up,
wherein the platform (100) comprises more than 10, in particular more than 16 battery cells (701, 702),
wherein at least one of the battery cells (701, 702) is formed as a lithium titanate battery with a nominal voltage between 1.2 V and 3 V, in particular 2.4 V,
wherein at least one of the battery cells (701, 702) is formed as a flat battery with a quadrangular circumference and a thickness of less than 22 mm, in particular less than 14 mm,
wherein at least one of the battery cells (701, 702) comprises a first pole, which is formed with a first contact pin (703), and a second pole, which is formed with a second contact pin (704),
wherein the first contact pin (703) and the second contact pin (704) are coupled to respective receiving sockets (705) of the power board (700),
wherein the first contact pin (703) and the second contact pin (704) have a different length,
wherein the base body (101) comprises at least two electrical contact surfaces (112), which are freely accessible from outside the platform (100),
wherein the contact surfaces (112) are connected to the power board (700) in a current-conducting manner,
wherein the two electrical contact surfaces (112) are formed in particular such that sliding contacts can be provided with contact points of a stationary charging station.

9. The platform (100) according to any one of the claims 1 to 8, further comprising
at least one antenna module (113), in particular a WLAN or a GPS antenna module (113),
wherein the base body (101) comprises a receiving opening (114) on the surface (103), in which the antenna module (113) is arranged, wherein the platform (100) comprises at least one of the following features:
wherein the antenna module (113) is arranged in the receiving opening (114) such that the antenna module (113) terminates flush with the surface (103), or
wherein a surface of the antenna module (113) is offset 6 mm, in particular 3 mm or 1 mm from the surface (103) of the base body (101) into the interior of the receiving opening (114),
wherein the antenna module (113) is formed as a flat antenna,
wherein the antenna module (113) is in particular cylindrical with a diameter of 90 mm to 50 mm, in particular of 70 mm,
wherein the antenna module (113) comprises a radiation characteristic (900) with at least one main lobe, which lies substantially within a horizontal plane when the platform (100) rests on the floor (130),
wherein the receiving opening (114) constitutes a passage opening between the surface (103) and the bottom surface (102) of the base body (102),
wherein the antenna module (113) comprises a housing (1001) and an antenna electronics (1002), which is fastened in the housing (1001),
wherein a spacing volume (1003) is present between an upper side of the housing (1001), which is flush with the surface (103) of the base body (101) or
protrudes from the surface (103) in the direction of the environment, and the antenna electronics (1002),
wherein the upper side of the housing (1001) is formed in an elastically deformable manner such that an elastic deformation into the spacing volume (1003) can be provided,
wherein elastic clamping elements (502) are provided in the receiving opening (114) between the base body (101) and the antenna module (113) such that a releasable clamping fastening of the antenna module (113) can be provided in the receiving opening (114),
wherein the antenna module (113) comprises a receptacle (901) in the circumferential surface for fastening the clamping element (502),
wherein the antenna module (113) comprises a signal coupling point in the region of the surface (103) of the base body (102) such that an antenna signal can be transmitted from the signal coupling point to a further signal coupling point of the dummy in a contactless manner.

10. The platform (100) according to any one of the claims 1 to 9,
wherein the elasticity of the clamping elements (502) is configured such that a release of the roller element (104) from the roller receptacle (1302) is enabled only at a decoupling force which is higher than the weight force of the roller element (104).

11. The platform (100) according to any one of the claims 1 to 10,
wherein the roller receptacle (1302) is arranged on the base body (101) rotatably about an axis of rotation (308),
wherein the roller element (104) is fastened eccentrically and spaced apart from the axis of rotation (308) on the roller receptacle (1302).

12. The platform (100) according to any one of the claims 1 to 11, further comprising
at least one electronic module (1201), which is arranged in the base body (101),
wherein the electronic module (1201) comprises an electronic component (1202), in particular with a circuit board,
wherein the electronic module (1201) comprises a planar viscoelastic damping element (1203), in particular a cylindrical damping element (1203), to which the electronic component (1202) is fastened,
wherein the electronic module (1201) comprises a carrier structure (1105), to which the viscoelastic damping element (1203) is fastened, so that vibrations, which act on the electronic component (1202) from the base body (101), can be damped by means of the viscoelastic damping element (1203).

13. The platform (100) according to claim 12, wherein the platform (100) comprises at least one of the following features:
wherein the viscoelastic damping element (1203) extends within a damping plane, the normal of which is parallel to the normal of a floor plane, such that the damping element (1203) is stiffer with respect to a deformation perpendicular to the normal of the floor plane than with respect to a deformation parallel to the normal of the floor plane, so that vertical forces, which extend parallel to the normal of the floor plane, can be damped more strongly by means of the viscoelastic damping element (1203) than horizontal forces, which extend perpendicular to the normal of the floor plane,
wherein the viscoelastic damping element (1203) is fastened to the carrier structure (1105) by means of a fastening screw (313),
wherein the fastening screw (313) comprises in particular a screw-in direction parallel to the normal of the floor plane,
wherein the surface (103) is formed reflective at least in regions, in particular for thermal radiation,
wherein the reflective regions of the surface (103) comprise in particular a mean roughness value Ra between Ra ≥ 0.1 µm to Ra ≥ 12.5 µm,
wherein the reflective surface has a reflectance of more than 80%, in particular more than 90% or more than 95%.

14. The platform (100) according to any one of the claims 1 to 13, further comprising
a reflection element for reflecting radiation, in particular thermal radiation, wherein the reflection element runs along the surface (103) of the base body (101) spaced apart by an insulating distance,
wherein in particular the insulating distance is filled with air or with an insulating material for thermal insulation.

15. The platform (100) according to any one of the claims 1 to 14, further comprising
at least one first functional module (1101) and a second electronic functional module (1102), which are arranged in the base body (101),
a connecting circuit board (1103), which is arranged between the first and second electronic functional module (1101, 1102) and the surface (103) of the base body (102),
wherein the first and second electronic functional module (1101, 1102) each comprise at least one contact plug (1104) on a side facing the surface (103) of the base body (102),
wherein the connecting circuit board (1103) extends along the surface (103) between the first and second electronic functional module (1101, 1102) and comprises respective contact points (1105) for receiving the contact plugs (1104) of the first and second electronic functional modules (1101, 1102), so that the functional modules (1101, 1102) can be plugged vertically onto the connecting circuit board (1103).

## Revendications

1. Plate-forme (100) pour un mannequin, permettant de simuler des situations de trafic, la plate-forme (100) comprenant
un corps de base (101) présentant une surface de fond (102) et une surface (103) formée vis-à-vis de la surface de fond (102),
au moins un élément formant rouleau (104), qui est agencé au niveau de la surface de fond (102),
dans laquelle l'élément formant rouleau (104) est réalisé de telle manière que le corps de base (101) peut être déplacé le long d'un sol au moyen de l'élément formant rouleau (104),
dans laquelle l'élément formant rouleau (104) présente un axe de rouleau (1301) et peut tourner autour de l'axe de rouleau (1301),
dans laquelle le corps de base (101) présente une région de fixation (106) et une région d'installation (105),
dans laquelle un dispositif de fixation (201) permettant de fixer le mannequin est réalisé sur la surface de fixation de la région de fixation (106),
dans laquelle des éléments fonctionnels peuvent être installés dans la région d'installation (105),
dans laquelle le corps de base (101) est assez mince pour qu'un véhicule de collision puisse rouler sans dommages sur le corps de base (101),
**caractérisé en ce que**
- le corps de base (101) présente au niveau de la surface de fond (102) un logement de rouleau (1302) permettant d'accueillir l'axe de rouleau (1301), et
- un élément de serrage élastique (502) est agencé dans le logement de rouleau (1302) de telle manière qu'une fixation par serrage peut être fournie entre le logement de rouleau (1302) et l'élément formant rouleau (104).

2. Plate-forme (100) selon la revendication 1, dans laquelle la plate-forme (100) présente au moins une des caractéristiques ci-dessous :
le corps de base (101) est réalisé de manière étagée,
une épaisseur de fixation (108) entre la surface de fond (102) et la surface (103) dans la région de fixation (106) est en particulier inférieure de 30 mm, 25 mm, 20 mm, 15 mm, 10 mm ou 5 mm à celle de la région d'installation (105) entre la surface de fond (102) et la surface (103) dans la région d'installation (105),
l'épaisseur de fixation (108) est inférieure à 40 mm, en particulier inférieure à 35 mm, inférieure à 30 mm, inférieure à 25 mm, inférieure à 20 mm, inférieure à 15 mm, inférieure à 10 mm, et/ou,
l'épaisseur d'installation (107) est inférieure à 60 mm, inférieure à 55 mm, en particulier inférieure à 50 mm, inférieure à 45 mm, inférieure à 40 mm, inférieure à 35 mm, inférieure à 30 mm, inférieure à 25 mm, inférieure à 20 mm, inférieure à 15 mm, inférieure à 10 mm, et/ou,
l'épaisseur maximale de la plate-forme entre un support au sol de l'élément formant rouleau (104) sur le sol (130) et la surface (103), en particulier de la région d'installation, est inférieure à 60 mm, inférieure à 55 mm, en particulier inférieure à 50 mm, 45 mm, 40 mm ou 35 mm,
la région de fixation (106) présente plus de 30 %, en particulier plus de 40 %, 50 % ou 70 % de la surface (103) du corps de base (102),
une région de transition (109) est formée entre la région d'installation (105) et la région de fixation (106),
la surface (103) présente dans la région de transition (109) un angle (α) compris entre 5° et 45°, en particulier compris entre 5° et 15° par rapport à la surface (103) dans la région d'installation (105) et/ou dans la région de fixation (106),
le corps de base (101) présente des régions de bord extérieur (110) qui entourent la région de fixation (106) et/ou la région d'installation (105),
les régions de bord extérieur (110) sont réalisées en forme de coin,
au moins une région de bord extérieur (110) en forme de coin présente un angle d'ouverture inférieur à 30°, en particulier inférieur à 25°,
les régions de bord extérieur (110) présentent une surface (103) absorbant les rayonnements, en particulier absorbant les ondes radar,
la surface des régions de bord extérieur (110) présente un revêtement gris, en particulier RAL 7005 ou RAL 7035,
la surface (103) présente dans la région de l'élément formant rouleau (104) un élément de couverture (111) en forme de dôme.

3. Plate-forme (100) selon la revendication 1 ou 2, présentant en outre
une chaîne cinématique (300) comprenant une unité d'entraînement (301),
dans laquelle l'élément formant rouleau (104) est couplé à l'unité d'entraînement (301) afin de transmettre un couple d'entraînement,
dans laquelle la chaîne cinématique (300) et l'élément formant rouleau (104) sont couplés l'un derrière l'autre le long d'une direction axiale de telle manière que la chaîne cinématique (300) et l'élément formant rouleau (104) se trouvent au moins partiellement dans une ouverture de réception (401) dans la surface de fond (102) du corps de base (102),
dans laquelle la chaîne cinématique est agencée avec l'élément formant rouleau (104) de manière à pouvoir pivoter dans et hors de l'ouverture de réception (401).

4. Plate-forme (100) selon la revendication 3, dans laquelle la plate-forme (100) présente au moins une des caractéristiques ci-dessous :
l'unité d'entraînement (301) présente un arbre d'entraînement (303) et l'élément formant rouleau (104) présente un arbre rotatif (302),
l'unité d'entraînement (301) et l'élément formant rouleau (104) sont agencés de telle manière que l'arbre d'entraînement (303) et l'arbre rotatif (302) s'étendent parallèlement à la direction axiale,
l'unité d'entraînement (301) et l'élément formant rouleau (104) sont agencés de telle manière que l'arbre d'entraînement (303) et l'arbre rotatif (302) s'étendent de manière coaxiale,
la chaîne cinématique présente une unité de transmission (304), en particulier un engrenage planétaire, qui est agencée entre l'arbre d'entraînement (303) et l'arbre rotatif (302) de telle manière qu'un couple d'entraînement de l'arbre d'entraînement (303) peut être transmis de manière convertie à l'arbre rotatif (302),
la chaîne cinématique présente une unité d'entraînement (305) supplémentaire,
l'unité d'entraînement (305) supplémentaire est couplée à l'unité de transmission (304) de telle manière qu'un couple d'entraînement supplémentaire peut être transmis de manière convertie depuis l'arbre d'entraînement (303) jusqu'à l'arbre rotatif (302),
l'unité de transmission (304) présente un engrenage planétaire avec au moins des première et deuxième roues planétaires (312),
l'unité d'entraînement (301) est couplée à la première roue planétaire (312) et l'unité d'entraînement (305) supplémentaire est couplée à la deuxième roue planétaire (312),
la chaîne cinématique (300), en particulier au niveau d'une extrémité axiale, présente une broche rotative (305) qui forme un axe de pivotement (307),
la broche rotative (305) est couplée au corps de base (101),
l'axe de pivotement (307) s'étend de manière transversale par rapport à la direction axiale de la chaîne cinématique (300),
la chaîne cinématique (300) présente au niveau de l'extrémité axiale un emplacement de couplage électrique (309) afin de coupler une fiche électrique,
la fiche électrique (310) est connectée de manière étanche à l'emplacement de couplage (309), en particulier au moyen d'une liaison adhésive et/ou d'une liaison par gaine thermorétractable.

5. Plate-forme selon la revendication 3 ou 4, présentant en outre
un ressort de pivotement (311), qui est agencé entre la chaîne cinématique (300) et le corps de base (101) de telle manière qu'un mouvement de pivotement de la chaîne cinématique (300) par rapport au corps de base (101) peut être amorti de manière définie,
dans lequel le ressort de pivotement (311) présente en particulier une caractéristique de ressort dégressive qui réduit la force du ressort à mesure de l'augmentation du déport de la chaîne cinématique (300) dans l'ouverture de réception (401),
dans lequel en particulier le ressort de pivotement (311), en particulier sous la forme d'un ressort hélicoïdal, produit une force de ressort le long d'une direction de force de ressort,
dans lequel le ressort de pivotement (311) est agencé entre le corps de base (101) et la chaîne cinématique (300) de telle manière que la force de ressort présente un angle (γ) compris entre 20° et 70°, en particulier compris entre 40° et 50°.

6. Plate-forme (100) selon l'une quelconque des revendications 3 à 5, dans laquelle la plate-forme présente au moins une des caractéristiques ci-dessous :
la chaîne cinématique présente une unité de fixation de rouleau (501) au niveau de laquelle l'élément formant rouleau (104) peut être fixé de manière interchangeable,
l'unité de fixation de rouleau (501) peut tourner autour de la direction axiale,
l'élément formant rouleau (104) peut être fixé de manière amovible à l'unité de fixation de rouleau (501) au moyen d'une vis de fixation (313), en particulier exclusivement au moyen de ladite vis,
la direction de vissage de la vis de fixation (313) est en particulier parallèle à la direction axiale,
l'élément formant rouleau (104) présente une première surface de contact (314) et l'unité de fixation de rouleau (501) présente une deuxième surface de contact (315),
la première surface de contact (314) et la deuxième surface de contact (315) présentent des éléments de denture correspondants l'un à l'autre afin de fournir un couplage avec verrouillage par complémentarité de forme,
les éléments de denture correspondants sont réalisés de telle manière qu'une denture Hirth peut être fournie, ou les éléments de denture correspondants sont réalisés sous forme de saillies hémisphériques (316) et de renfoncements hémisphériques (317) correspondants.

7. Plate-forme (100) selon l'une quelconque des revendications 1 à 6, présentant en outre
un circuit imprimé de puissance (700) agencé dans le corps de base (101), en particulier dans la région d'installation (105), et
au moins une cellule de batterie (701) couplée au circuit imprimé de puissance (700) de telle manière que le circuit imprimé de puissance (700) permet un chargement et une fourniture d'électricité de la cellule de batterie (701).

8. Plate-forme (100) selon la revendication 7, dans laquelle la plate-forme (100) présente au moins une des caractéristiques ci-dessous :
la plate-forme (100) présente en outre au moins deux cellules de batterie (701, 702),
les cellules de batterie (701, 702) sont connectées en parallèle,
les tensions individuelles des cellules de batterie (701, 702) sont hautement modulables,
la plate-forme (100) présente plus de 10, en particulier plus de 16 cellules de batterie (701, 702),
au moins une des cellules de batterie (701, 702) est réalisée sous la forme d'une batterie au titanate de lithium d'une tension nominale comprise entre 1,2 V et 3 V, en particulier de 2,4 V, au moins une des cellules de batterie (701, 702) étant réalisée sous la forme d'une batterie plate avec une circonférence carrée et une épaisseur inférieure à 22 mm, en particulier inférieure à 14 mm,
au moins une des cellules de batterie (701, 702) présente un premier pôle formé avec une première broche de contact (703) et un deuxième pôle formé avec une deuxième broche de contact (704),
la première broche de contact (703) et la deuxième broche de contact (704) sont couplées à des fiches de réception (705) correspondantes du circuit imprimé de puissance (700),
la première broche de contact (703) et la deuxième broche de contact (704) présentent une longueur différente,
le corps de base (101) présente au moins deux surfaces de contact électrique (112) librement accessibles depuis l'extérieur de la plate-forme (100),
les surfaces de contact (112) sont connectées de manière conductrice au circuit imprimé de puissance (700),
les deux surfaces de contact électriques (112) sont en particulier réalisées de telle manière que des contacts glissants avec des emplacements de contact d'une station de charge stationnaire peuvent être fournis.

9. Plate-forme (100) selon l'une quelconque des revendications 1 à 8, présentant en outre
au moins un module d'antenne (113), en particulier un module d'antenne WLAN ou GPS (113),
dans laquelle le corps de base (101) présente au niveau de la surface (103) une ouverture de réception (114) dans laquelle est agencé le module d'antenne (113), dans laquelle la plate-forme (100) présente au moins une des caractéristiques ci-dessous :
le module d'antenne (113) est agencé dans l'ouverture de réception (114) de telle manière que le module d'antenne (113) affleure la surface (103), ou
une surface du module d'antenne (113) est décalée de 6 mm, en particulier de 3 mm ou 1 mm, par rapport à la surface (103) du corps de base (101) à l'intérieur de l'ouverture de réception (114),
le module d'antenne (113) est réalisé sous la forme d'une antenne plate,
le module d'antenne (113) présente en particulier une forme cylindrique avec un diamètre compris entre 90 mm et 50 mm, en particulier de 70 mm,
le module d'antenne (113) présente une caractéristique de rayonnement (900) avec au moins un lobe principal qui se trouve essentiellement dans un plan horizontal lorsque la plate-forme (100) repose sur le sol (130),
l'ouverture de réception (114) constitue une ouverture de passage entre la surface (103) et la surface de fond (102) du corps de base (102),
le module d'antenne (113) présente un boîtier (1001) et une électronique d'antenne (1002) fixée dans le boîtier (1001),
un volume d'espacement (1003) est présent entre une face supérieure du boîtier (1001), qui affleure la surface (103) du corps de base (101) ou qui fait saillie par rapport à la surface (103) en direction de l'environnement, et l'électronique d'antenne (1002),
la face supérieure du boîtier (1001) est réalisée de manière élastiquement déformable afin qu'une déformation élastique puisse être fournie dans le volume d'espacement (1003),
des éléments de serrage élastiques (502) sont prévus dans l'ouverture de réception (114) entre le corps de base (101) et le module d'antenne (113) de telle manière qu'une fixation par serrage, amovible, du module d'antenne (113) puisse être fournie dans l'ouverture de réception (114),
le module d'antenne (113) présente dans la surface périphérique un logement (901) permettant de fixer l'élément de serrage (502),
le module d'antenne (113) présente dans la région de la surface (103) du corps de base un emplacement de couplage de signal (102) de telle manière qu'un signal d'antenne peut être transmis sans contact à partir de l'emplacement de couplage de signal jusqu'à un autre emplacement de couplage de signal du mannequin.

10. Plate-forme (100) selon l'une quelconque des revendications 1 à 9,
dans laquelle l'élasticité des éléments de serrage (502) est configurée de telle manière que ce n'est qu'avec une force de découplage supérieure au poids de l'élément formant rouleau (104) qu'un retrait de l'élément formant rouleau (104) à partir du logement de rouleau (1302) est possible.

11. Plate-forme (100) selon l'une quelconque des revendications 1 à 10,
dans laquelle le logement de rouleau (1302) est agencé au niveau du corps de base (101) de manière à pouvoir tourner autour d'un axe de rotation (308),
dans laquelle l'élément formant rouleau (104) est fixé au logement de rouleau (1302) de manière excentrée et à distance de l'axe de rotation (308).

12. Plate-forme (100) selon l'une quelconque des revendications 1 à 11, présentant en outre
au moins un module électronique (1201), qui est agencé dans le corps de base (101),
dans laquelle le module électronique (1201) présente un composant électronique (1202), en particulier comprenant un circuit imprimé,
dans laquelle le module électronique (1201) présente un élément d'amortissement viscoélastique plan (1203), en particulier un élément d'amortissement cylindrique (1203), sur lequel est fixé le composant électronique (1202),
dans laquelle le module électronique (1201) présente une structure de support (1105) sur laquelle est fixé l'élément d'amortissement viscoélastique (1203), de sorte que les vibrations agissant sur le composant électronique (1202) à partir du corps de base (101) peuvent être amorties au moyen de l'élément d'amortissement viscoélastique (1203).

13. Plate-forme (100) selon la revendication 12, dans laquelle la plate-forme (100) présente au moins une des caractéristiques ci-dessous :
l'élément d'amortissement viscoélastique (1203) s'étend à l'intérieur d'un plan d'amortissement dont la normale est parallèle à la normale d'un plan de sol, de telle manière que l'élément d'amortissement (1203) est plus rigide vis-à-vis d'une déformation perpendiculairement à la normale du plan de sol que vis-à-vis d'une déformation parallèlement à la normale du plan de sol, de sorte que les forces verticales qui s'étendent parallèlement à la normale du plan de sol peuvent être amorties, au moyen de l'élément d'amortissement viscoélastique (1203), plus fortement que les forces horizontales qui s'étendent perpendiculairement à la normale du plan de sol,
l'élément d'amortissement viscoélastique (1203) est fixé sur la structure de support (1105) au moyen d'une vis de fixation (313),
la vis de fixation (313) présente en particulier une direction de vissage parallèle à la normale du plan du sol,
la surface (103) est réalisée au moins par endroits de manière réfléchissante, en particulier en ce qui concerne le rayonnement thermique,
les régions réfléchissantes de la surface (103) présentent en particulier une rugosité moyenne Ra comprise entre Ra ≥ 0,1 µm et Ra ≥ 12,5 µm,
la surface réfléchissante présente une réflectivité supérieure à 80 %, en particulier supérieure à 90 % ou supérieure à 95 %.

14. Plate-forme (100) selon l'une quelconque des revendications 1 à 13, présentant en outre
un élément réfléchissant permettant de réfléchir le rayonnement, en particulier le rayonnement thermique,
dans laquelle l'élément réfléchissant s'étend le long de la surface (103) du corps de base (101) à une distance d'isolation,
dans laquelle la distance d'isolation est en particulier remplie d'air ou d'un matériau isolant permettant l'isolation thermique.

15. Plate-forme (100) selon l'une quelconque des revendications 1 à 14, présentant en outre
au moins un premier module fonctionnel (1101) et un deuxième module fonctionnel électronique (1102), qui sont agencés dans le corps de base (101),
un circuit imprimé de connexion (1103) agencée entre les premier et deuxième modules fonctionnels électroniques (1101, 1102) et la surface (103) du corps de base (102),
dans laquelle les premier et deuxième modules fonctionnels électroniques (1101, 1102) présentent respectivement au moins une fiche de contact (1104) sur un côté dirigé vers la surface (103) du corps de base (102),
dans laquelle le circuit imprimé de connexion (1103) s'étend le long de la surface (103) entre les premier et deuxième modules fonctionnels électroniques (1101, 1102) et présente des emplacements de contact (1105) correspondants permettant d'accueillir les fiches de contact (1104) des premier et deuxième modules fonctionnels électroniques (1101, 1102), de sorte que les modules fonctionnels (1101, 1102) peuvent être enfichés verticalement sur le circuit imprimé de connexion (1103).
